(19) Europäisches Patentamt
European Patent Office
Office européen des brevets

(11) Publication number: **0 220 637 B1**

# (12) EUROPEAN PATENT SPECIFICATION

(45) Date of publication of patent specification: **18.09.91**

(51) Int. Cl.$^5$: **C08F 299/02**, C09D 163/08

(21) Application number: **86114471.5**

(22) Date of filing: **18.10.86**

## (54) Low gloss, high impact strength powder coating resins.

(30) Priority: **24.10.85 US 790991**

(43) Date of publication of application:
**06.05.87 Bulletin 87/19**

(45) Publication of the grant of the patent:
**18.09.91 Bulletin 91/38**

(84) Designated Contracting States:
**AT BE CH DE ES FR GB GR IT LI NL SE**

(56) References cited:
**WO-A-85/00610**
**FR-A- 2 317 331**
**US-A- 4 308 185**

(73) Proprietor: **THE DOW CHEMICAL COMPANY**
**2030 Dow Center Abbott Road P.O. Box 1967**
**Midland Michigan 48640-1967(US)**

(72) Inventor: **Hefner, Robert E., Jr.**
**109 Wedgewood**
**Lake Jackson, TX 77566(US)**
Inventor: **Sanford, Joe F.**
**604 Dogwood**
**Lake Jackson, TX 77566(US)**
Inventor: **Haynes, Deborah I.**
**1610 West 10th**
**Freeport, TX 77541(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**

**EP 0 220 637 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Epoxy resins which have been modified by in situ formation of polymers are well known. For example, Japan Kokai Tokyo Koho JP 59 98,169 teaches the copolymerization of a partial monobutyl maleate of an epoxy resin with styrene and/or acrylic monomers. The resulting polymer modified epoxy resins are then used to provide powder coatings.

European Patent Application 0078,527 teaches the copolymerization of various mixtures of epoxy resins, mono ethylenically unsaturated monomers and grafting agents. These products are cured to provide adhesive compositions and are not taught for use in powder coating formulations.

All of the above inventions can provide resins for use in powder coatings with usable properties; however, deficiencies in impact strength are apparent and all of the cured products possess a relatively high degree of surface gloss.

There is currently a major need for an epoxy resin which can be used with conventional curing agents such as, for example, accelerated dicyandiamide, to provide low gloss powder coatings without reduced impact strength. Current technology has provided fillers such as, for example, synthetic amorphous silicas which can provide reduced gloss. However, the loadings of said fillers that are required to reduce gloss also typically reduce impact strength and processability. U.S. Patent No. 3,947,384 describes curing agents consisting of a salt of a polycarboxylic acid and a cyclic amidine which provide reduced gloss in cured powder coatings. However, said curing agents typically reduce impact strength thus yielding brittle coatings that often exhibit excessive yellowness at typical cure temperatures.

The present invention provides a specific process which results in low gloss, high impact strength epoxy resins. These epoxy resins, when formulated and cured to provide powder coatings, overcome most, if not all, of the deficiencies inherent to the currently known technology.

One aspect of the present invention pertains to an advanced epoxy resin composition which comprises the product resulting from

(I) polymerizing in the presence of a catalytic quantity of a suitable polymerization catalyst

(A) the reaction product of

(1) a diglycidyl ether of a dihydric phenol having an epoxide equivalent weight of from 111 to 350 with

(2) a compound containing a group reactive with an epoxide group and a polymerizable ethylenically unsaturated group in an amount of from 0.001 to 0.05, preferably from 0.005 to 0.025, equivalent per epoxide equivalent contained in component (A-1); with

(B) a monomer feed containing

(1) at least one vinyl aromatic monomer in an amount of from 31 to 60, preferably from 35 to 45, percent by weight of the total weight of components (A), (B) and (C);

(2) a compound containing a group reactive with an epoxide group and a polymerizable ethylenically unsaturated group in an amount of from 0.001 to 0.05, preferably from 0.005 to 0.025, equivalent per epoxide equivalent contained in component (A-1); and optionally

(3) a hydroxyalkyl acrylate or methacrylate or an alkyl acrylate or methacrylate in an amount of from zero to 15, preferably from about 1 to 5, percent by weight based on total weight of components (B-1) and (B-3); and

(II) advancing, in the presence of a catalytic quantity of a suitable advancement catalyst, the resultant polymerized product with

(C) a dihydric phenol in an amount of from 0.125 to 0.80, preferably from 0.375 to 0.50 hydroxyl equivalents per epoxide equivalent contained in component (A-1).

A further aspect of the present invention concerns thermosettable (curable) powder coating formulations prepared by combining one or more of the advanced epoxy resin compositions with

(A) an effective quantity of at least one suitable curing agent therefor,

(B) optionally, one or more curing agent accelerators or catalysts,

(C) optionally, one or more particulate fillers,

(D) optionally, one or more pigments,

(E) optionally, one or more gloss control additives,

(G) optionally, one or more texture control additives, and,

(H) optionally, one or more air release (defoaming) agents.

Another aspect of the present invention concerns products and compositions resulting from curing the aforementioned advanced epoxy resin compositions and powder coating formulations.

Suitable diglycidyl ethers of a dihydric phenol which can be employed herein include, for example, those represented by the formulas

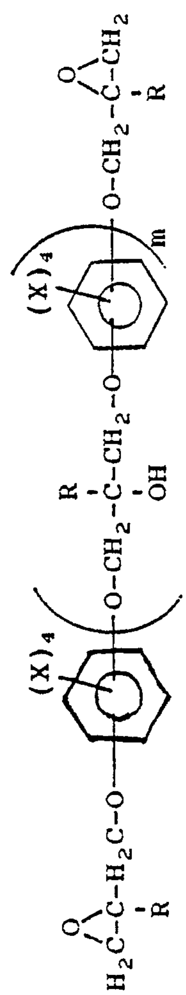

(I)

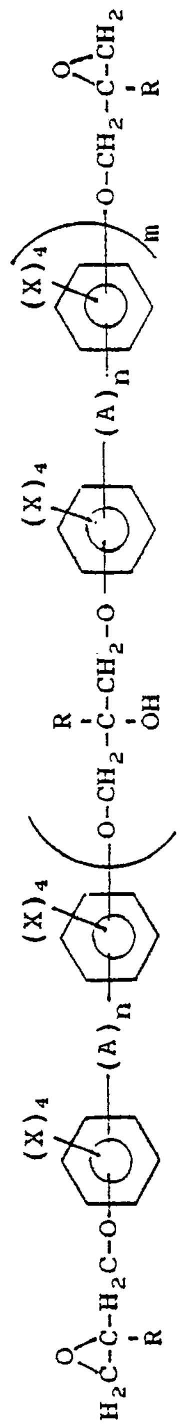

(II)

wherein A is a divalent hydrocarbon group having from one to 10 carbon atoms, -O-, -S-, -S-S-,

$$-\overset{\overset{O}{\|}}{S}-,$$

$$-\underset{\underset{O}{\|}}{\overset{\overset{O}{\|}}{S}}-, \quad -\overset{\overset{O}{\|}}{C}-;$$

each X is independently hydrogen, bromine, chlorine, or a hydrocarbyl or hydrocarbyloxy group having from 1 to 10 carbon atoms; each R is independently hydrogen or a methyl group; m has a value from zero to 5, preferably from about zero to about 3 and n has a value of zero or 1.

The term hydrocarbyl as employed herein means any aliphatic, cycloaliphatic, aromatic, aryl substituted aliphatic, or aliphatic substituted aromatic groups. Likewise, the term hydrocarbyloxy group means a hydrocarbyl group having an oxygen linkage between it and the object to which it is attached.

Suitable diglycidyl ethers of a dihydric phenol which can be employed herein include, for example, the diglycidyl ethers of resorcinol, hydroquinone, catechol, bisphenol A (4,4'-isopropylidenediphenol), bis(4,4'-dihydroxyphenyl)methane, 2,2'-bis(4-hydroxyphenyl)pentane, 3,3',5,5'-tetramethyl-4,4'-dihydroxydiphenyl, 4,4'-dihydroxydiphenyl sulfone, 4,4'-dihydroxybenzophenone, 3,3',5,5'-tetrabromo-4,4'-isopropylidenediphenol, 4,4'-bis(p-hydroxyphenyl)diphenyl ether, 4,4'-dihydroxydiphenyl sulfide, and mixtures thereof. Most preferred as the diglycidyl ether of a dihydric phenol are the diglycidyl ethers of bisphenol A .

Suitable compounds which contain both a group reactive with an epoxide group and a polymerizable ethylenically unsaturated group include compounds wherein said group reactive with an epoxide group is a compound containing a carboxylic acid, hydroxyl or amido group. Suitable compounds which contain both a group reactive with an epoxide group and a polymerizable ethylenically unsaturated group include, for example, the acrylic acids, such as acrylic acid and methacrylic acid; the monoesters of $\alpha,\beta$-unsaturated dicarboxylic acids, such as monomethyl maleate and monobutylfumarate; the alkenylphenols such as p-isopropenylphenol and m-vinylphenol; the hydroxyalkyl acrylates such as 2-hydroxyethyl acrylate, 2-hydroxyethyl methacrylate, 2-hydroxypropyl acrylate, 2-hydroxypropyl methacrylate and the acrylamides such as methacrylamide and acrylamide, and any combination thereof. Most preferred as the compound containing a group reactive with an epoxide group and a polymerizable ethylenically unsaturated group is methacrylic acid.

The prereaction (step A) of the diglycidyl ether of a dihydric phenol and a compound which contains both a group reactive with an epoxide group and a polymerizable ethylenically unsaturated group is performed at a temperature of from 75 to 200°C, preferably from 140 to 160°C for from 15 (900 s) to 150 minutes (9000 s), preferably for from 30 (1800 s) to 60 minutes (3600 s). The prereaction step times and temperatures vary as a function of the type of compound which contains both a group reactive with an epoxide group and a polymerizable ethylenically unsaturated group that is used.

A catalyst may optionally be employed to facilitate reaction of the group reactive with an epoxide group and the epoxide group. Generally, a catalyst is not required and, furthermore, is not desired when said group reactive with an epoxide group is -COOH. It may, however, be beneficial to use a catalyst when said group reactive with an epoxide group is, for example, -OH. Typical of such catalysts useful for this purpose are the advancement catalysts described herein.

Suitable vinyl aromatic monomers which can be employed as component (B-1) in the copolymerization reaction step with the prereaction product of a diglycidyl ether of a dihydric phenol and a compound containing both a group reactive with an epoxide group and a polymerizable ethylenically unsaturated group include those represented by the formula

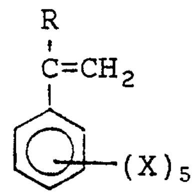

(III)

wherein R and X are as hereinbefore defined.

Representative of the vinyl aromatic monomers which can be employed herein are styrene, chlorostyrenes, methylstyrenes, t-butylstyrenes, α-methylstyrene, methoxystyrenes, and mixtures thereof. Most preferred as the vinyl aromatic monomer is styrene.

Suitable hydroxyalkyl acrylates or methacrylates, alkyl acrylates or methacrylates or mixtures thereof which can be employed as component (B-3) in the copolymerization reaction step with the prereaction product of a diglycidyl ether of a dihydric phenol and a compound containing both a group reactive with an epoxide group and a polymerizable ethylenically unsaturated group include hydroxyalkyl acrylates or methacrylates, alkyl acrylates or methacrylates or mixtures thereof. The specific amount and type of said acrylates or methacrylates may be chosen so as to effect the final properties of a cured powder coating. Small amounts (0.25 to 2 percent by weight based on total weight of monomer feed used) of a hydroxyalkyl acrylate or methacrylate are used to increase adhesion of the powder coating to metal substrates. Larger amounts (2.1 to 15 percent by weight based on total weight of monomer feed used) of a hydroxyalkyl acrylate or methacrylate increase the gloss of the powder coating. The alkyl acrylates or methacrylates, especially those possessing 8 or more carbon atoms, are used in small amounts (1 to 5 percent by weight based on total weight of monomer feed used) to decrease the gloss of the powder coating. Larger amounts (5.1 to 15 percent by weight based on total weight of monomer feed used) of certain alkyl acrylates or methacrylates can be used to also impart modified texture to the powder coating. Combinations of said acrylates and methacrylates may also be used. Specific hydroxyalkyl acrylates or methacrylates, alkyl acrylates or methacrylates which can optionally be employed herein include those represented by the formula

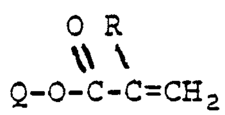

(IV)

wherein R is as hereinbefore defined and Q is a monovalent hydrocarbyl group having from one to 25 carbon atoms or a hydroxyalkyl group having from two to 25 carbon atoms and may be branched, cyclic or polycyclic. Representative of the hydroxyalkyl acrylates or methacrylates, alkyl acrylates or methacrylates or mixtures thereof which can optionally be employed herein are 2-hydroxyethyl acrylate, 2-hydroxyethyl methacrylate, 2-hydroxypropyl acrylate, cyclohexyl acrylate, lauryl methacrylate, stearyl acrylate, mixtures thereof and the like.

Suitable free radical forming catalysts which can be employed in the copolymerization reaction step with the prereaction product of a diglycidyl ether of a dihydric phenol and a compound containing both a group reactive with an epoxide group and a polymerizable ethylenically unsaturated group include the azo and diazo compounds as well as the organic peroxides and hydroperoxides. Suitable free radical forming catalysts include, for example, 2,2'-azobisisobutyronitrile, 2,2'-azobis(2,4-dimethyl-4-methoxyvaleronitrile), 1-t-butylazo-1-cyanocyclohexane, t-butylperbenzoate, t-butylperoctoate, t-butylhydroperoxide, di-t-butylperoxide, dicumylperoxide, cumene hydroperoxide, and mixtures thereof. An amount of from 1.0 to 5.0, preferably from 2.0 to 3.0 percent by weight, based on total weight of monomer feed used, of at least one free radical forming catalyst is employed.

The copolymerization reaction of the prereaction product (A) of a diglycidyl ether of a dihydric phenol and a compound containing both a group reactive with an epoxide group and a polymerizable ethylenically unsaturated group with a monomer feed consisting of (B-1) a vinyl aromatic monomer, (B-2) a compound containing both a group reactive with an epoxide group, and a polymerizable ethylenically unsaturated group, and optionally, (B-3) a hydroxyalkyl acrylate or methacrylate, an alkyl acrylate or methacrylate, or a mixture thereof may be completed using a variety of reaction sequences. Generally, the monomer feed (B) containing a free radical forming polymerization catalyst is added to the prereaction product (A) over a

period of from 45 minutes (2700 s) to 150 minutes (9000 s), preferably from 75 minutes (4500 s) to 120 minutes (7200 s) while maintaining a reaction temperature of from 125° to 175° C, preferably from 140° to 160° C. A post reaction of from 30 minutes (1800 s) to 150 minutes (9000 s), preferably from 45 minutes (2700 s) to 90 minutes (5400 s) is completed after completion of the monomer feed addition.

It is necessary to maintain an inert atmosphere throughout the copolymerization reaction. This is achieved by blanketing the reaction mixture with nitrogen, argon or some other inert gas. Adequate stirring is required to intimately mix and disperse the reactants.

In an equally preferred process of the present invention, the free radical forming catalyst may be removed as a component of the monomer feed and added to the reaction mixture separately. If this is done, it is generally desirable to maintain concurrent addition of the free radical forming catalyst and the remaining monomer feed (B-1, B-2 and, optionally, B-3). The rate of this concurrent addition should be adjusted such that an excess of unpolymerized monomer feed does not accumulate.

As a further embodiment of the present invention, a portion of free radical forming catalyst may be added to the reaction mixture at the end of the monomer feed addition, more preferably 15 minutes (900 s) to 120 minutes (7200 s) after completion of the monomer feed addition. This is done if unpolymerized monomer feed is present and allows for completion of the copolymerization reaction.

The advancement reaction of the aforementioned copolymerization product of (A) and (B) with a dihydric phenol is performed in the presence of an advancement catalyst. Suitable dihydric phenols include, for example, those represented by the formulas

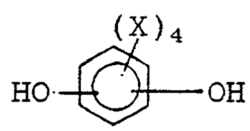

(V)

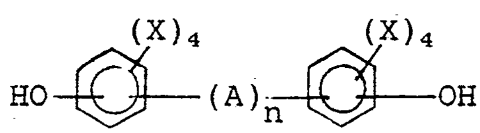

(VI)

wherein X, A and n are as hereinbefore defined. Representative of the bisphenols are resorcinol, hydroquinone, catechol, bisphenol A (4,4'-isopropylidenediphenol), bis(4,4'-dihydroxyphenyl)methane, 2,2'-bis(4-hydroxyphenyl)pentane, 3,3',5,5'-tetramethyl-4,4'-dihydroxydiphenyl, 4,4'-dihydroxydiphenyl sulfone, 4,4'-dihydroxybenzophenone, 3,3',5,5'-tetrabromo-4,4'-isopropylidenediphenol, 4,4'-bis(p-hydroxyphenyl)-diphenyl ether, 4,4'-dihydroxydiphenyl sulfide, and mixtures thereof. Most preferred as the bisphenol is bisphenol A.

Suitable advancement catalysts which can be employed in the process of the present invention include most any catalyst which will catalyze the reaction between a vicinal epoxy group and a phenolic hydroxyl group. Such catalysts include, for example, those disclosed in U.S. Patent Nos. 3,306,872; 3,341,580; 3,379,684; 3,477,990; 3,547,881; 3,637,590; 3,843,605; 3,948,855; 3,956,237; 4,048,141; 4,093,650; 4,131,633; 4,132,706; 4,171,420; and 4,177,216.

Particularly suitable catalysts are the quaternary phosphonium and ammonium compounds such as, for example, ethyltriphenylphosphonium chloride, ethyltriphenylphosphonium bromide, ethyltriphenylphosphonium iodide, ethyltriphenylphosphonium acetate, ethyltriphenylphosphonium acetate•acetic acid complex, ethyltriphenylphosphonium phosphate, tetrabutylphosphonium chloride, tetrabutylphosphonium bromide, tetrabutylphosphonium iodide, tetrabutylphosphonium acetate, tetrabutylphosphonium acetate•acetic acid complex, butyltriphenylphosphonium tetrabromobisphenate, butyltriphenylphosphonium bisphenate, butyltriphenylphosphonium bicarbonate, benzyltrimethylammonium chloride, tetramethylammonium hydroxide, and mixtures thereof.

After completion of either the copolymerization reaction (I) or the advancement reaction (II), it is generally beneficial, although not required, to subject the reaction product to a vacuum stripping step. This is accomplished by pulling a vacuum on the reactor, thus removing and condensing any materials which volatilize from the reaction product.

In a variation on this vacuum stripping step, various modifying agents or additives, such as, for example, flow control agents, gloss control agents, pigments, texture control additives, air release agents,

mixtures thereof and the like may be added to the reaction product prior to the vacuum stripping step. This allows for removal of any volatile components contributed by said additives.

The powder coating formulations of the present invention are prepared using the aforesaid epoxy resin compositions and a suitable curing agent therefor. Said curing agents should be substantially non-sintering and exhibit latency at the formulating temperatures and conditions employed. Suitable such curing agents are described in the Handbook of Epoxy Resins, by Lee and Neville, 1967, McGraw-Hill which is incorporated herein by reference. Representative of these curing agents are the boron trifluoride-amine complexes, polycarboxylic acids or anhydrides, the guanamines, guanidines, hydrazines, dihydrazides, melamines, substituted ureas and dicyandiamide or dicyandiamide derivatives. Most preferred as the curing agent is dicyandiamide.

Formulating methods well known to the prior art are employed to prepare the powder coating formulations of the present invention. Preparation of typical epoxy resin based powder coating formulations are described in Fundamentals of Powder Coating by Miller and Taft, 1974, Society of Manufacturing Engineers, Dearborn, Michigan.

In the general method of preparation, the solid epoxy resin product is flaked or ground then dry mixed or blended with a non-sintering curing agent and optionally, one or more curing agent accelerators or catalysts, particulate fillers, pigments, flow control agents, gloss control additives, texture control additives and air release agents. The dry mixed product is then hot melt blended typically by use of a kneading-type extruder. The extruded product passes through chilled rollers and is then recovered and crushed to a rough powder. Further grinding to a fine powder is accomplished via use of a high speed hammer mill or other type of grinding equipment. The resulting fine powder is subjected to a size classification step to recover the desired range of product particle size. The desired product size distribution for the product may vary depending on the intended end use of the product, but generally, sizes between 45 µm to 180 µm (80 mesh to 325 mesh) are most desired. Well known methods that are suitable for use in size classifying powder coating formulations include screening and air classification.

The resulting powder coating formulation is applied to the substrate to be coated using methods well known to the prior art. These methods are delineated in detail by the aforementioned Miller and Taft reference and include powder dusting, fluidized bed processes, electrostatic powder spraying, electrostatic fluidized bed processes, and others.

The powder coated article is cured using methods and conditions well known to the prior art. This typically involves heating in an oven for an amount of time sufficient to complete the cure. When dicyandiamide is the curing agent and 2-methylimidazole is the curing agent accelerator used with the epoxy resin compositions of the present invention, curing times of 5 minutes to 30 minutes at a reaction temperature of from 150 to 220 °C are generally sufficient.

The powder coating formulation optionally, although preferably, contains one or more curing agent accelerators or catalysts. Suitable such curing agent accelerators or catalysts are described in the aforementioned Handbook of Epoxy Resins and Fundamentals of Powder Coating references. Representative of these curing agent accelerators or catalysts are the amino substituted pyridines, imidazoles, metallic salts, tertiary amines, phenols, and mixtures thereof. Most preferred as the curing agent accelerator for use with a dicyandiamide curing agent is 2-methylimidazole.

The powder coating formulation optionally, although preferably, contains one or more particulate fillers. Fillers are used in powder coatings for a wide range of purposes, primary of which is economic, i.e. as a less expensive diluent. Other properties imparted by fillers can include one or more of the following: handling and processing properties, impact modification, dimensional stability, moisture and chemical resistance, flame resistance, modified thermal conductivity, modified electrical properties, modified rheology, color modification and texture modification. Suitable such fillers are described in Non-Fibrous Fillers for Epoxy Resin Formulations presented at the 7th Electrical Insulation Conference, Chicago, Illinois, October 15-19, 1967 by D. A. Shimp. Representative of these fillers are barytes ($BaSO_4$), titanium dioxide, carbon black, silica flour, calcium carbonate, mixtures thereof and the like. The particle size distribution, shape, chemical composition, surface area and use level, i.e. resin to filler ratio, can be adjusted singularly or collectively to change the resultant cured powder coating. Simple preliminary experiments within the normal capability of those skilled in the art are ordinarily performed to aid in filler choice.

The powder coating formulation optionally contains one or more pigments. Said pigments are typically used to add color to the cured powder coating. Suitable such pigments are described in Pigments for Colouring Epoxy Powder Coatings by Maltman and Deverell-Smith in Pigment and Resin Technology, November 1973, pp. 15-19.

The powder coating formulation optionally, although preferably, contains one or more flow control agents. Flow control agents are used in powder coatings to adjust the rheological properties of the total

powder coating formulation thus insuring uniform coating film thickness, wet-out and costing of edges. Suitable such flow control agents are described in Acrylic Flow Control Agents for the Coating Industry by Skora in Polymers Paint and Colour Journal, September 5, 1979, pp. 867-870. Most preferred as the flow control agents are the polyacrylates such as, for example, ethyl acrylate and 2-ethylhexyl acrylate copolymer, and poly(butyl acrylate).

The powder coating formulation optionally contains one or more texture control additives. Texture control additives are used in powder coatings to modify the surface characteristics of the cured powder coating. Materials which provide smooth or rough surface finishes may be employed. Glass microspheres, metal powders and polymeric powders are examples of the types of additives capable of modifying the powder coating surface to a textured finish.

The powder coating formulation optionally contains one or more air release agents. Said agents are used in powder coatings to alleviate surface defects, such as pinholes in the cured powder coating, induced by air entrainment. A most preferred air release agent is benzoin, as described in Surface Coatings, Vol. 2 - Paints and Their Application by The Oil and Colour Chemists' Association, Australia, published by Chapman and Hall, 1984, p. 598.

The powder coating formulation optionally contains one or more gloss control additives. Gloss control additives are used to reduce the high degree of reflected light from the typical cured epoxy resin surface. Suitable such gloss control agents are certain amorphous silicas, silicic acid and the curing agent system consisting of a salt of a polycarboxylic acid and a cyclic amidine as taught by U.S. Patent No. 3,947,384.

Other additives or adjuvants may be incorporated into the powder coating formulations of the present invention for their known and intended use therein. One such additive is a slip aid, as described in the aforementioned Surface Coatings reference.

The cured product of the present invention is a powder coating over a substrate such as steel which provides a low gloss surface with high impact strength.

The following examples are illustrative of the present invention and are not to be construed as to limiting the scope thereof in any manner.

EXAMPLE 1

Low Gloss Epoxy Resin - 0.01 Equivalent per Epoxide Equivalent of Methacrylic Acid in Prereaction, 0.015 Equivalent per Epoxide Equivalent of Methacrylic Acid in Monomer Feed

A commercial grade (D.E.R.® 383, The Dow Chemical Company) of a diglycidyl ether of bisphenol A (600 g, 3.31 epoxide equivalent) having an EEW of 181.3 and glacial methacrylic acid (2.86 g, 0.033 mole) were charged to a 2-liter, 5-neck round bottom flask fitted with a water-cooled condenser, nitrogen purge, addition funnel, thermometer and stirrer. Heating to 150°C was initiated on the stirred solution. Forty minutes (2400 s) later the reactor temperature reached 145°C and a nitrogen purge was initiated. Two minutes (120 s) later the 150°C temperature was reached. The monomer feed, a mixture of styrene (480 g, 4.6 moles), glacial methacrylic acid (4.29 g, 0.05 mole) and tertiary butyl perbenzoate (12 g, 0.06 mole) was charged to the addition funnel and added dropwise to the stirred solution. The reactor temperature was maintained between 145°C and 155°C throughout the monomer feed addition. After one hour and twenty minutes (4800 s), the monomer feed addition was complete. Post-reaction of the stirred solution was continued for sixty minutes (3600 s) at 150°C After sixty minutes (3600 s) at 150°C, bisphenol A (162.8 g, 0.71 mole) was charged to the stirred solution. Four minutes (240 s) later the reactor temperature dropped to 137°C with complete dissolution of the bisphenol A in the resin solution. An advancement catalyst (ethyltriphenylphosphonium acetate•acetic acid complex, 1 g, 70% in methanol) was added to the reactor which was then reheated to 150°C. Four minutes (240 s) later the reactor reached 150°C and heating was discontinued. A maximum exotherm of 182°C resulted seven minutes (420 s) later. The reactor was allowed to cool to 175°C where it was held for one hour (3600 s) after the maximum exotherm. The low gloss epoxy resin product was recovered as an opaque, pale-yellow colored, brittle solid with a final epoxide equivalent weight of 683.

EXAMPLE 2

Low Gloss Epoxy Resin - 0.01 Equivalent per Epoxide Equivalent of Methacrylic Acid in Prereaction, 0.02 Equivalent per Epoxide Equivalent of Methacrylic Acid in Monomer Feed

A commercial grade (D.E.R.® 383, The Dow Chemical Company) of a diglycidyl ether of bisphenol A

(600 g, 3.31 epoxide equivalent) having an average EEW of 181.3 and glacial methacrylic acid (2.86 g, 0.033 mole) were charged to a 2-liter, 5-neck round bottom flask fitted with a water-colled condenser, nitrogen purge, addition funnel, thermometer and stirrer. Heating to 150 °C was initiated on the stirred solution. Thirty-six minutes (2160 s) later the 150 °C temperature was reached and the nitrogen purge was initiated. The monomer feed, a mixture of styrene (480 g, 4.6 moles), glacial methacrylic acid (5.72 g, 0.066 mole) and tertiary butyl perbenzoate (12 g, 0.06 mole) was charged to the addition funnel and added dropwise to the stirred solution. The reactor temperature was maintained between 145 °C and 155 °C throughout the monomer feed addition. After ninety-seven minutes (5820 s) the monomer feed addition was complete. Post-reaction of the stirred solution was continued for sixty minutes (3600 s) at 150 °C. After sixty minutes (3600 s) at 150 °C, bisphenol A (162.8 g, 0.71 mole) was charged to the stirred solution. Five minutes (300 s) later the reactor temperature dropped to 135 °C with complete dissolution of the bisphenol A in the resin solution. An advancement catalyst (ethyltriphenylphosphonium acetate•acetic acid complex, 1 g, 70 percent in methanol) was added to the reactor which was then reheated to 150 °C. Four minutes (240 s) later the reactor reached 150 °C and heating was discontinued. A maximum exotherm of 185 °C resulted six minutes (360 s) later. The reactor was allowed to cool to 175 °C where it was held for one hour (3600 s) after the maximum exotherm. The low gloss epoxy resin product was recovered as an opaque, pale-yellow colored, brittle solid with a final epoxide equivalent weight of 704.

EXAMPLE 3

Low Gloss Epoxy Resin - 0.02 Equivalent per Epoxide Equivalent of Methacrylic Acid in Prereaction, 0.01 Equivalent per Epoxide Equivalent of Methacrylic Acid in Monomer Feed

A commercial grade (D.E.R.® 383, The Dow Chemical Company) of a diglycidyl ether of bisphenol A (600 g, 3.31 epoxide equivalent) having an EEW of 181.3 and glacial methacrylic acid (5.72 g, 0.066 mole) were charged to a 2-liter, 5-neck round bottom flask fitted with a water-cooled condenser, nitrogen purge, addition funnel, thermometer and stirrer. Heating to 150 °C was initiated on the stirred solution. Forty-three minutes (2580 s) later the 150 °C temperature was reached and the nitrogen purge was initiated. The monomer feed, a mixture of styrene (480 g, 4.6 moles), glacial methacrylic acid (2.86 g, 0.033 mole) and tertiary butyl perbenzoate (12 g, 0.06 mole) was charged to the addition funnel and added dropwise to the stirred solution. After fifty-two minutes (3120 s) a temperature excursion to 160 °C was noted, monomer feed was stopped and air cooling initiated to bring reactor temperature in line. Six minutes (360 s) later the reactor temperature reached 153 °C and monomer feed was restarted. The reactor temperature was maintained between 145 °C and 155 °C for the remaining monomer feed addition. After an additional twenty-nine minutes (1740 s) the monomer feed addition was complete. Post-reaction of the stirred solution was continued for sixty minutes (3600 s) at 150 °C. After sixty minutes (3600 s) at 150 °C, bisphenol A (162.8 g, 0.71 mole) was charged to the stirred solution. Five minutes (300 s) later the reactor temperature dropped to 130 °C with complete dissolution of the bisphenol A in the resin solution. An advancement catalyst (ethyltriphenylphosphonium acetate•acetic acid complex, 1 g, 70 percent in methanol) was added to the reactor which was then reheated to 150 °C. Eight minutes (480 s) later the reactor reached 150 °C and heating was discontinued. A maximum exotherm of 182 °C resulted six minutes (360 s) later. The reactor was allowed to cool to 175 °C where it was held for one hour (3600 s) after the maximum exotherm. The low gloss epoxy resin product was recovered as an opaque, pale-yellow colored, brittle solid with a final epoxide equivalent weight of 711.

EXAMPLE 4

Low Gloss Epoxy Resin-0.02 Equivalent per Epoxide Equivalent of Methacrylic Acid in Prereaction, 0.015 Equivalent per Epoxide Equivalent of Methacrylic Acid in Monomer Feed

A commercial grade (D.E.R.® 383, The Dow Chemical Company) of a diglycidyl ether of bisphenol A (600 g, 3.31 epoxide equivalent) having an EEW of 181.3 and glacial methacrylic acid (5.72 g, 0.066 mole) were charged to a 2-liter, 5-neck round bottom flask fitted with a water-cooled condenser, nitrogen purge, addition funnel, thermometer and stirrer. Heating to 150 °C was initiated on the stirred solution. Forty-three minutes (2580 s) later the 150 °C temperature was reached and the nitrogen purge was initiated. The monomer feed, a mixture of styrene (480 g, 4.6 moles), glacial methacrylic acid (4.3 g, 0.05 mole) and tertiary butyl perbenzoate (12 g, 0.06 mole) was charged to the addition funnel and added dropwise to the stirred solution. The reaction temperature was maintained between 145 °C and 155 °C throughout the

monomer feed addition. After one hour and forty-four minutes (6240 s) the monomer feed addition was complete. Post-reaction of the stirred solution was continued for sixty minutes (3600 s) at 150°C. After sixty minutes (3600 s) at 150°C, bisphenol A (162.8 g, 0.71 mole) was charged to the stirred solution. Four minutes (240 s) later the reactor temperature dropped to 135°C with complete dissolution of the bisphenol A in the resin solution. An advancement catalyst (ethyltriphenylphosphonium acetate•acetic acid complex, 1 g, 70 percent in methanol) was added to the reactor which was then reheated to 150°C. Five minutes (300 s) later the reactor reached 150°C and heating was discontinued. A maximum exotherm of 180°C resulted five minutes (300 s) later. The reactor was allowed to cool to 175°C where it was held for one hour (3600 s) after the maximum exotherm. The low gloss epoxy resin product was recovered as an opaque, pale-yellow colored brittle solid with a final epoxide equivalent weight of 711.

COMPARATIVE EXPERIMENT A

Standard Polystyrene Modified Epoxy Resin: No Methacrylic Acid Prereaction, 0.01 Equivalent per Epoxide Equivalent of Methacrylic Acid in Monomer Feed

A commercial grade (D.E.R.® 383, The Dow Chemical Company) of a diglycidyl ether of bisphenol A (600 g, 3.31 epoxide equivalent) having an EEW of 181.3 was charged to a 2-liter, 5-neck round bottom flask fitted with a water-cooled condenser, nitrogen purge, addition funnel, thermometer and stirrer. Heating to 150°C was initiated on the stirred liquid epoxy resin under nitrogen atmosphere. Forty-five minutes (2700 s) later the 150°C temperature was reached. The monomer feed, a mixture of styrene (480 g, 4.6 moles), glacial methacrylic acid (2.86 g, 0.033 mole) and tertiary butyl perbenzoate (12 g, 0.06 mole) was charged to the addition funnel and added dropwise to the stirred solution. The reaction temperature was maintained between 145°C and 155°C throughout the monomer feed addition. After ninety minutes (5400 s) the monomer feed addition was complete. Post-reaction of the stirred solution was continued for sixty minutes (3600 s) at 150°C. After sixty minutes (3600 s) at 150°C, bisphenol A (162.8 g, 0.71 mole) was charged to the stirred solution. Five minutes (300 s) later the reactor temperature dropped to 130°C with complete dissolution of the bisphenol A in the resin solution. An advancement catalyst (ethyltriphenylphosphonium acetate•acetic acid complex, 1 g, 70 percent in methanol) was added to the reactor which was then reheated to 150°C. Nine minutes (540 s) later the reactor reached 150°C and heating was discontinued. A maximum exotherm of 180°C resulted seven minutes (420 s) later. The reactor was allowed to cool to 175°C where it was held for one hour (3600 s) after the maximum exotherm. The polystyrene modified epoxy resin product was recovered as a pale-yellow colored, opaque, brittle solid with a final epoxide equivalent weight of 691.

COMPARATIVE EXPERIMENT B

Standard Polystyrene Modified Epoxy Resin: No Methacrylic Acid in Prereaction, 0.025 Equivalent per Epoxide Equivalent of Methacrylic Acid in Monomer Feed

A commercial grade (D.E.R.® 383, The Dow Chemical Company) of a diglycidyl ether of bisphenol A (600 g, 3.31 epoxide equivalent) having an EEW of 181.3 was charged to a 2-liter, 5-neck round bottom flask fitted with a water-cooled condenser, nitrogen purge, addition funnel, thermometer and stirrer. Heating to 150°C was initiated on the stirred liquid epoxy resin. Thirty minutes (1800 s) later the reactor temperature reached 155°C and the nitrogen purge was initiated. Ten minutes (600 s) later the 150°C temperature was established. The monomer feed, a mixture of styrene (480 g, 4.6 moles), glacial methacrylic acid (7.15 g, 0.083 mole) and tertiary butyl perbenzoate (12 g, 0.06 mole) was charged to the addition funnel and added dropwise to the stirred solution. The reaction temperature was maintained between 145°C and 155°C throughout the monomer feed addition. After one hour forty-five minutes (6300 s) the monomer feed addition was complete. Post-reaction of the stirred solution was continued for forty-seven minutes (2820 s) at 150°C. After forty-seven minutes (2820 s) a vacuum was drawn to remove unreacted styrene and other lights. During the vacuum stripping 8.7 grams of unreacted styrene and other lights were recovered in an overhead cold trap. After twenty-five minutes (1500 s) of vacuum stripping at 150°C, bisphenol A (162.8 g, 0.71 mole) was charged to the solution. Four minutes (240 s) later the reactor temperature dropped to 134°C with complete dissolution of the bisphenol A in the resin solution. An advancement catalyst (ethyltriphenylphosphonium acetate•acetic acid complex, 1 g, 70 percent in methanol) was added to the reactor which was then reheated. Seven minutes (420 s) later the reactor reached 150°C and heating was discontinued. A maximum exotherm of 177°C resulted seven minutes (420 s) later.

The reactor was allowed to cool to 175°C where it was held for one hour (3600 s) after the maximum exotherm. The polystyrene modified epoxy resin product was recovered as a pale-yellow colored, opaque, brittle solid with a final epoxide equivalent weight of 701.

COMPARATIVE EXPERIMENT C

Standard Polystyrene Modified Epoxy Resin: 0.025 Equivalent per Epoxide Equivalent of Methacrylic Acid in Prereaction, No Methacrylic Acid in Monomer Feed

A commercial grade (D.E.R.® 383, The Dow Chemical Company) of a diglycidyl ether of bisphenol A (600 g, 3.31 epoxide equivalent) having an EEW of 181.3 and glacial methacrylic acid (7.15 g, 0.083 mole) was charged to a 2-liter, 5-neck round bottom flask fitted with a water-cooled condenser, nitrogen purge, addition funnel, thermometer and stirrer. Heating to 150°C was initiated on the stirred solution. Forty-six minutes (2760 s) later the reactor temperature reached 140°C and the nitrogen purge was initiated. Seven minutes (420 s) later the 150°C temperature was reached. The monomer feed, a mixture of styrene (480 g, 4.6 moles), and tertiary butyl perbenzoate (12 g, 0.06 mole) was charged to the addition funnel and added dropwise to the stirred solution. The reactor temperature was maintained between 145°C and 155°C throughout the monomer feed addition. After one hour thirty minutes (5400 s) the monomer feed addition was complete. Post-reaction of the stirred solution was continued for forty-five minutes (2700 s) at 150°C. After forty-five minutes (2700 s) a vacuum was drawn to remove unreacted styrene and other lights. During the vacuum stripping 5.1 grams of unreacted styrene and other lights were recovered in an overhead cold trap. After thirty minutes (1800 s) of vacuum stripping at 150°C, bisphenol A (162.8 g, 0.71 mole) was charged to the solution. Four minutes (240 s) later the reactor temperature dropped to 133°C with complete dissolution of the bisphenol A in the resin solution. An advancement catalyst (ethyltriphenylphosphonium acetate•acetic acid complex, 1 g, 70 percent in methanol) was added to the reactor which was then reheated. Six minutes, 360 s, later the reactor reached 150°C and heating was discontinued. A maximum exotherm of 178°C resulted eight minutes, 480 s, later. The reactor was allowed to cool to 175°C where it was held for one hour, 3600 s, after the maximum exotherm. The polystyrene modified epoxy resin product was recovered as a pale-yellow colored, opaque, brittle solid with a final epoxide equivalent weight of 698.

EXAMPLE 5

Preparation of Powder Coating Formulations

Portions of each of the epoxy resins from Examples 1-4 and Comparative Experiments A-C were ground in a Waring-type blender to a fine powder. Formulation weights, as per Table I, of the epoxy resin, dicyandiamide, a mixture of 17 percent 2-methylimidasole and 83 percent by weight dicyandiamide, Modaflow® II, and filler, if used, were placed in a plastic bag, sealed and dry mixed to a homogeneous dry blend. The dry-mixed formulations were then extruded in a Buss-Condux PLK 46 single screw extruder (equipped with a 46 mm diameter kneader screw operated at 120 rpm) with Zone 1 at 50°C and Zone 2 at 100°C. The extrudate was passed through BCI Chill Rolls (165.1 mm [6½"] diameter), cooled and crushed. The crushed extrudate was then fine ground in a Brinkmann Centrifugal Grinding Mill utilizing the 24-tooth grinding attachment. The finely ground extrudate was sieved through No. 140 106 µm (150 mesh) standard test sieves (wire cloth). The 106 µm (150 mesh) powder coating formulations were applied via electrostatic spray with a Gema Ag Type 710 Laboratory Unit (set at 60-70 kV) on to, 101.6 mm x 304.8 mm x 0.529 mm (4" x 12" x 20 gauge) cold rolled steel, clean treatment Parker test panels (Parker Division, Hooker Chemicals and Plastics Corporation). The electrostatically coated panels were set in a Blue M Touchmaster® convection-type oven (Model No. POM7) and cured at 180°C (356°F) for twenty minutes (1200 s). After removal from the oven the panels were cooled and evaluated via the following test methods: coating thickness was deter-mined per ASTM D1186 by utilizing a Fischer Perma-Scope® ES film thickness tester. Surface gloss was determined per ASTM D523 (DIN 67530) using a Mallinckrodt Multi Gloss gloss meter. Gardner forward and reverse impact strengths were determined per ASTM D2794 using a Gardner "Coverall" Bend and Impact Tester, 1.17m (46 inch) tube length, 0-18.1 J (0-160 in.-lb.) tester, with a 1.81 kg (four pound), 12.7 mm (one-half inch), diameter cone. Visualization of any surface cracks at the impact sites was facilitated by application of an acidified copper sulfate ($CuSO_4$) solution for a period of 30 seconds. Impact areas were observed for copper deposits or iron-rust stains after exposure to the copper sulfate solution.

Film thickness, surface gloss and Gardner impact strength values of the cured powder coatings

prepared using the epoxy resins of Examples 1-4 and Comparative Experiments A-C are reported in Table I.

TABLE I

| Designation of Epoxy Resin | Amount of Epoxy Resin grams | Curing Agent A[1] grams | Curing Agent B[2] grams | Modaflow® II[3] grams | Filler Type; grams | Film Thickness; (mils) mm | Gloss Degrees/ percent | Gardner Impact Forward/ Reverse (in.-lb.) J | Coating Appearance |
|---|---|---|---|---|---|---|---|---|---|
| Example 1 | 500 | 10.19 | 6.00 | 6.66 | $BaSO_4$; 150 | (1.1-1.4) 0.028-0.036 | 20/7.1 60/33.4 85/71.7 | (160/160) 18.1/18.1 | 1,6 |
| Example 2 | 500 | 9.93 | 6.00 | 6.66 | $BaSO_4$; 150 | (1.0-1.5) 0.025-0.038 | 20/10.9 60/44.0 85/70.0 | (160/140) 18.1/15.8 | 1,3 |
| Example 2 | 500 | 9.63 | 6.00 | 6.6 | $BaSO_4$; 145 and Carbon Black; 5 | (2.5) 0.064 | 20/2.1 60/15.9 85/31.1 | (160/160) 18.1/18.1 | 1,4 |
| Example 3 | 551.3 | 10.79 | 6.62 | 7.34 | $BaSO_4$; 165.39 | (1.3-1.5) 0.033-0.038 | 20/17.4 60/63.7 | (160/160) 18.1/18.1 | 1,4,6 |
| Example 3 | 570 | 11.16 | 6.84 | 5.88 | None | (1.5-2.3) 0.038-0.058 | 20/43.0 60/86.6 | (160/160) 18.1/18.1 | 1,4 |
| Example 4 | 500 | 9.79 | 6.00 | 6.66 | $BaSO_4$; 150 | (1.0-1.5) 0.025-0.038 | 20/15.5 60/55.8 85/53.2 | (160/160) 18.1/18.1 | 1,3 |
| Example 4 | 500 | 9.79 | 6.00 | 6.66 | $BaSO_4$; 145 and Carbon Black; 5 | (1.5-2.0) 0.038-0.050 | 20/18.2 60/61.5 85/65.9 | (160/160) 18.1/18.1 | 2 |

TABLE I (Continued)

| Designation of Epoxy Resin | Amount of Epoxy Resin grams | Curing Agent A[1] grams | Curing Agent B[2] grams | Modaflow® II[3] grams | Filler Type; grams | Film Thickness; (mils) mm | Gloss Degrees/ percent | Gardner Impact Forward/ Reverse (in.-lb.) J | Coating Appearance |
|---|---|---|---|---|---|---|---|---|---|
| Comp. Expt. A | 600 | 12.22 | 7.20 | 6.19 | $BaSO_4$; 180 | (1.1-1.8) 0.028-0.046 | 20/76.4 60/104.0 | (<40/<20) <4.5/<2.3 | 1 |
| Comp. Expt. B | 500 | 10.00 | 6.00 | 6.66 | $BaSO_4$; 150 | (1.0-1.5) 0.026-0.038 | 20/31 60/76 85/82 | (100/20) 11.3/2.3 | 1,3 |
| Comp. Expt. C | 500 | 10.06 | 6.00 | 6.66 | $BaSO_4$; 150 | (0.9-1.4) 0.023-0.036 | 20/25 60/71 85/69 | (160/140) 18.1/15.8 | 2,3 |

[1]Curing Agent A was dicyanamide
[2]Curing Agent B was a mixture of 83 percent by weight dicyanamide and 17 percent by weight 2-methylimidazole
[3]A polyacrylate flow control agent (Monsanto)

Key to Coating Appearance Designations in Tables

1. slight to barely perceptible texturing
2. pronounced texturing (orange peel)
3. minor pinholes
4. slight to barely perceptible spotting
5. pronounced spotting
6. regions of slightly hazy surface appearance (do not debond from metal)

EXAMPLE 6

Low Gloss Epoxy Resin - 0.01 Equivalent per Epoxide Equivalent of Methacrylic Acid in Prereaction, 0.015 Equivalent per Epoxide Equivalent of Methacrylic Acid, 0.5 pbw 2-Hydroxypropyl Acrylate in Monomer Feed

A commercial grade (D.E.R.® 383, The Dow Chemical Company) of a diglycidyl ether of bisphenol A (600 g, 3.31 epoxide equivalent) having an EEW of 181.3 and glacial methacrylic acid (2.86 g, 0.033 mole) were charged to a 2-liter, 5-neck round bottom flask fitted with a water-cooled condenser, nitrogen purge, addition funnel, thermometer and stirrer. Heating to 150°C was initiated on the stirred solution. Forty-five minutes (2700 s) later the 150°C temperature was reached and the nitrogen purge was initiated. The monomer feed, a mixture of styrene (480 g, 4.6 moles), glacial methacrylic acid (2.86 g, 0.033 mole) 2-hydroxypropyl acrylate (2.4 g, 0.018 mole) and tertiary butyl perbenzoate (12 g, 0.06 mole) was charged to the addition funnel and added dropwise to the stirred solution. The reactor temperature was maintained between 145°C and 155°C throughout the monomer feed addition. After eighty-eight minutes (5280 s) the monomer feed addition was complete. Post-reaction of the stirred solution was continued for sixty minutes (3600 s) at 150°C. After sixty minutes (3600 s) at 150°C, bisphenol A (162.8 g, 0.71 mole) was charged to the stirred solution. Five minutes (300 s) later the reactor temperature dropped to 130°C with complete dissolution of the bisphenol A in the resin solution. An advancement catalyst (ethyltriphenylphosphonium acetate•acetic acid complex, 1 g, 70 percent in methanol) was added to the reactor which was then reheated to 150°C. Five minutes (300 s) later the reactor reached 150°C and heating was discontinued. A maximum exotherm of 180°C resulted nine minutes (540 s) later. The reactor was allowed to cool to 175°C where it was held for one hour (3600 s) after the maximum exotherm. The low gloss epoxy resin product was recovered as a pale-amber colored, brittle solid with a final epoxide equivalent weight of 695.

EXAMPLE 7

Low Gloss Epoxy Resin - 0.01 Equivalent per Epoxide Equivalent of Methacrylic Acid in Prereaction, 0.015 Equivalent per Epoxide Equivalent of Methacrylic Acid, 0.5 pbw 2-Hydroxypropyl Acrylate in Monomer Feed

A commercial grade (D.E.R.® 383, The Dow Chemical Company) of a diglycidyl ether of bisphenol A (600 g, 3.31 epoxide equivalent) having an EEW of 181.3 and glacial methacrylic acid (2.86 g, 0.033 mole) were charged to a 2-liter, 5-neck round bottom flask fitted with a water-cooled condenser, nitrogen purge, addition funnel, thermometer and stirrer. Heating to 150°C was initiated on the stirred solution. Forty-two minutes (2520 s) later the 150°C temperature was reached and the nitrogen purge was initiated. The monomer feed, a mixture of styrene (480 g, 4.6 moles), glacial methacrylic acid (4.3 g, 0.05 mole), 2-hydroxypropyl acrylate (2.4 g, 0.018 mole) and tertiary butyl perbenzoate (12 g, 0.06 mole) was charged to the addition funnel and added dropwise to the stirred solution. The reactor temperature was maintained between 145°C and 155°C throughout the monomer feed addition. After ninety minutes (5400 s) the monomer feed addition was complete. Post-reaction of the stirred solution was continued for sixty minutes (3600 s) at 150°C. After sixty minutes (3600 s) at 150°C, bisphenol A (162.8 g, 0.71 mole) was charged to the stirred solution. After five minutes (300 s) the reactor temperature had dropped to 130°C with complete dissolution of the bisphenol A in the resin solution. An advancement catalyst (ethyltriphenylphosphonium acetate•acetic acid complex, 1 g, 70 percent in methanol) was added to the reactor which was then reheated to 150°C. Ten minutes (600 s) later the reactor reached 150°C and heating was discontinued. A

maximum exotherm of 180°C resulted ten minutes (600 s) later. The reactor was allowed to cool to 175°C where it was held for one hour (3600 s) after the maximum exotherm. The low gloss epoxy resin product was recovered as a pale-amber colored, brittle solid with a final epoxide equivalent weight of 708.

EXAMPLE 8

Low Gloss Epoxy Resin - 0.01 Equivalent per Epoxide Equivalent of Methacrylic Acid in Prereaction, 0.01 Equivalent per Epoxide Equivalent of Methacrylic Acid, 1 pbw 2-Hydroxypropyl Acrylate in Monomer Feed

A commercial grade (D.E.R.® 383, The Dow Chemical Company) of a diglycidyl ether of bisphenol A (600 g, 3.31 epoxide equivalent) having an EEW of 181.3 and glacial methacrylic acid (2.86 g, 0.033 mole) were charged to a 2-liter, 5-neck round bottom flask fitted with a water-cooled condenser, nitrogen purge, addition funnel, thermometer and stirrer. Heating to 150°C was initiated on the stirred solution. Forty-four minutes (2640 s) later the reactor temperature reached 145°C and the nitrogen purge was initiated. Three minutes (180 s) later the 150°C temperature was reached. The monomer feed, a mixture of styrene (475.2 g, 4.55 moles), glacial methacrylic acid (2.86 g, 0.033 mole), 2-hydroxypropyl acrylate (4.8 g, 0.037 mole) and tertiary butyl perbenzoate (12 g, 0.06 mole) was charged to the addition funnel and added dropwise to the stirred solution. The reactor temperature was maintained between 145°C and 155°C throughout the monomer feed addition. After ninety-one minutes (5460 s) the monomer feed addition was complete. Post-reaction of the stirred solution was continued for sixty minutes (3600 s) at 150°C. After sixty minutes (3600 s) at 150°C, bisphenol A (162.8 g, 0.71 mole) was charged to the stirred solution. After four minutes (240 s) the reactor temperature dropped to 135°C with complete dissolution of the bisphenol A in the resin solution. An advancement catalyst (ethyltriphenylphosphonium acetate•acetic acid complex, 1 g, 70 percent in methanol) was added to the reactor which was then reheated to 150°C. Five minutes (300 s) later the reactor reached 150°C and heating was discontinued. A maximum exotherm of 181°C resulted eight minutes (480 s) later. The reactor was allowed to cool to 175°C where it was held for one hour (3600 s) after the maximum exotherm. The low gloss epoxy resin product was recovered as a pale-amber colored, brittle solid with a final epoxide equivalent weight of 705.

EXAMPLE 9

Low Gloss Epoxy Resin - 0.01 Equivalent per Epoxide Equivalent of Methacrylic Acid in Prereaction, 0.01 Equivalent per Epoxide Equivalent of Methacrylic Acid, 2 pbw 2-Hydroxypropyl Acrylate in Monomer Feed

A commercial grade (D.E.R.® 383, The Dow Chemical Company) of a diglycidyl ether of bisphenol A (600 g, 3.31 epoxide equivalent) having an EEW of 181.3 and glacial methacrylic acid (2.86 g, 0.033 mole) were charged to a 2-liter, 5-neck round bottom flask fitted with a water-cooled condenser, nitrogen purge, addition funnel, thermometer and stirrer. Heating to 150°C was initiated on the stirred solution. Thirty-two minutes (1920 s) later the reactor temperature reached 145°C and the nitrogen purge was initiated. Three minutes (180 s) later the 150°C temperature was reached. The monomer feed, a mixture of styrene (470.4 g, 4.5 moles), glacial methacrylic acid (2.86 g, 0.033 mole), 2-hydroxypropyl acrylate (9.6 g, 0.074 mole) and tertiary butyl perbenzoate (12 g, 0.06 mole) was charged to the addition funnel and added dropwise to the stirred solution. The reactor temperature was maintained between 145°C and 155°C throughout the monomer feed addition. After eighty-one minutes (4860 s) the monomer feed addition was complete. Post-reaction of the stirred solution was continued for sixty minutes (3600 s) at 150°C. After sixty minutes (3600 s) at 150°C, bisphenol A (162.8 g, 0.71 mole) was charged to the stirred solution. After five minutes (300 s) the reactor temperature dropped to 134°C with complete dissolution of the bisphenol A in the resin solution. An advancement catalyst (ethyltriphenylphosphonium acetate•acetic acid complex, 1 g, 70 percent in methanol) was added to the reactor which was then reheated to 150°C. Seven minutes (420 s) later the reactor reached 150°C and heating was discontinued. A maximum exotherm of 181°C resulted five minutes (300 s) later. The reactor was allowed to cool to 175°C where it was held for one hour (3600 s) after the maximum exotherm. The low gloss epoxy resin product was recovered as a pale-amber colored, brittle solid with a final epoxide equivalent weight of 696.

EXAMPLE 10

Low Gloss Epoxy Resin - 0.01 Equivalent per Epoxide Equivalent of Methacrylic Acid in Prereaction, 0.015 Equivalent per Epoxide Equivalent of Methacrylic Acid, 10 pbw Lauryl Methacrylate in Monomer Feed

A commercial grade (D.E.R.® 383, The Dow Chemical Company) of a diglycidyl ether of bisphenol A (600 g, 3.31 epoxide equivalent) having an EEW of 181.3 and glacial methacrylic acid (2.86 g, 0.033 mole) were charged to a 2-liter, 5-neck round bottom flask fitted with a water-cooled condenser, nitrogen purge, addition funnel, thermometer and stirrer. Heating to 150 °C was initiated on the stirred solution. Thirty-five minutes (2100 s) later the reactor temperature reached 150 °C and the nitrogen purge was initiated. The monomer feed, a mixture of styrene (432 g, 4.15 moles), glacial methacrylic acid (4.3 g, 0.05 mole) lauryl methacrylate (48 g, 0.189 mole) and tertiary butyl perbenzoate (12 g, 0.06 mole) was charged to the addition funnel and added dropwise to the stirred solution. The reactor temperature was maintained between 145 °C and 155 °C throughout the monomer feed addition. After eighty-five minutes (5100 s) the monomer feed addition was complete. Post-reaction of the stirred solution was continued for sixty minutes (3600 s) at 150 °C. After sixty minutes (3600 s) at 150 °C, bisphenol A (162.8 g, 0.71 mole) was charged to the stirred solution. Five minutes (300 s) later the reactor temperature dropped to 134 °C with complete dissolution of the bisphenol A in the resin solution. An advancement catalyst (ethyltriphenylphosphonium acetate•acetic acid complex, 1 g, 70 percent in methanol) was added to the reactor which was then reheated to 150 °C. Thirteen minutes (780 s) later the reactor reached 150 °C and heating was discontinued. A maximum exotherm of 175 °C resulted five minutes (300 s) later. The reactor was held at 175 °C for one hour (3600 s) after the maximum exotherm. The low gloss epoxy resin product was recovered as a pale-amber colored, brittle solid with a final epoxide equivalent weight of 702.

## EXAMPLE 11

### Preparation of Powder Coating Formulations

Portions of each of the epoxy resins from Examples 6-10 were used to prepare powder coating formulations using the method of Example 5. Cured powder coated steel panels were prepared and tested using the methods of Example 5. The results are reported in Table II.

TABLE II

| Designation of Epoxy Resin | Amount of Epoxy Resin grams | Curing Agent $A^1$ grams | Curing Agent $B^2$ grams | Modaflow® II[3] grams | Filler Type; grams | Film Thickness; (mils) mm | Gloss Degrees/ percent | Gardner Impact Forward/ Reverse (in.-lb) J | Coating Appearance |
|---|---|---|---|---|---|---|---|---|---|
| Example 6 | 440 | 8.91 | 5.28 | 5.86 | $BaSO_4$; 132 | (1.3-1.6) 0.033-0.041 | 20/12.6 60/47.0 | (160/160) 18.1/18.1 | 1,3 |
| Example 6 | 600 | 12.15 | 7.20 | 6.19 | None | (1.2-2.1) 0.030-0.053 | 20/3.9 60/17.1 | (160/160) 18.1/18.1 | 1,3,4,6 |
| Example 7 | 500 | 9.85 | 6.00 | 6.66 | $BaSO_4$; 150 | (1.0-1.5) 0.025-0.038 | 20/9.2 60/38.0 85/69.0 | (160/<140) 18.1/<15.8 | 1,3 |
| Example 8 | 527.6 | 10.47 | 6.33 | 7.03 | $BaSO_4$; 158.28 | (1.0-1.4) 0.025-0.036 | 20/10.5 60/42.6 | (160/160) 18.1/18.1 | 1 |
| Example 8 | 550 | 10.90 | 6.60 | 5.68 | None | (1.4-2.4) 0.036-0.061 | 20/6.7 60/24.1 | (160/160) 18.1/18.1 | 2,5,6 |
| Example 9 | 515.2 | 10.41 | 6.18 | 6.86 | $BaSO_4$; 154.56 | (1.4-1.8) 0.036-0.046 | 20/10.1 60/40.2 | (160/160) 18.1/18.1 | 1 |

TABLE II (Continued)

| Designation of Epoxy Resin | Amount of Epoxy Resin grams | Curing Agent $A^1$ grams | Curing Agent $B^2$ grams | Modaflow® II[3] grams | Filler Type; grams | Film Thickness; (mils) mm | Gloss Degrees/ percent | Gardner Impact Forward/ Reverse (in.-lb.) J | Coating Appearance |
|---|---|---|---|---|---|---|---|---|---|
| Example 9 | 550 | 11.11 | 6.60 | 5.68 | None | (1.2-2.0) 0.031-0.051 | 20/27.1 60/72.5 | (160/160) (18.1/18.1) | 1,3,6 |
| Example 10 | 500 | 9.98 | 6.00 | 6.66 | $BaSO_4$; 150 | (1.0-1.5) 0.025-0.038 | 20/2.6 60/11.3 85/46.1 | (140/<140) 15.8/<15.8 | 2,3,5 |
| Example 10 | 500 | 9.98 | 6.00 | 6.66 | $BaSO_4$; 145 and Carbon Black; 5 | (1.5-2.0) 0.038-0.051 | 20/0.6 60/5.8 85/45.8 | (160/160) 18.1/18.1 | 5 |

[1]Curing Agent A was dicyanamide

[2]Curing Agent B was a mixture of 83 percent by weight dicyanamide and 17 percent by weight 2-methylimidazole

[3]A polyacrylate flow control agent (Monsanto)

EXAMPLE 12

Low Gloss Epoxy Resin - 50 Percent by Weight Styrene

A commercial grade (D.E.R.® 383, The Dow Chemical Company) of a diglycidyl ether of bisphenol A (495 g, 2.73 epoxy equivalent) having an EEW of 181.3 and glacial methacrylic acid (2.36 g, 0.027 mole) was charged to a 2-liter, 5-neck round bottom flask fitted with a water-cooled condenser, nitrogen purge, addition funnel, thermometer and stirrer. Heating to 150° C was initiated on the stirred solution. Thirty minutes (1800 s) later the reactor temperature reached 140° C and the nitrogen purge was initiated. Four minutes (240 s) later the 150° C temperature was reached. The monomer feed, a mixture of styrene (600 g, 5.75 moles), glacial methacrylic acid (3.54 g, 0.041 mole) and tertiary butyl perbenzoate (15 g, 0.07 mole) was charged to the addition funnel and added dropwise to the stirred solution. The reactor temperature was maintained between 145° C and 155° C throughout the monomer feed addition. After one hour and thirty-six minutes (5760 s) the monomer feed addition was complete. Post-reaction of the stirred solution was continued for forty minutes (2400 s) at 150° C. At that time a vacuum was drawn to remove unreacted styrene and other lights. During the vacuum stripping 10.5 grams of unreacted styrene and other lights were recovered in an overhead cold trap. After 30 minutes (1800 s) of vacuum stripping at 150° C, bisphenol A (105.2 g, 0.461 mole) was charged to the stirred solution. Four minutes later the reactor temperature dropped to 144° C with complete dissolution of the bisphenol A in the resin solution. An advancement catalyst (ethyltriphenylphosphonium acetate•acetic acid complex, 1 g, 70 percent in methanol) was added to the reactor which was then reheated. Thirty-five minutes (2100 s) late the reactor reached 176° C and heating was discontinued. A maximum exotherm of 182° C resulted two minutes (120 s) later. The reactor was allowed to cool to 175° C where it was held for one hour after the maximum exotherm. The low gloss epoxy resin product was recovered as an translucent, pale-yellow colored, brittle solid with a final epoxide equivalent weight of 711.

COMPARATIVE EXPERIMENT D

Standard Polystyrene Modified Epoxy Resin: 30 Percent by Weight Styrene

A commercial grade (D.E.R.® 383, The Dow Chemical Company) of a diglycidyl ether of bisphenol A (750 g, 4.14 epoxide equivalent) having an EEW of 181.2 and glacial methacrylic acid (2.69 g, 0.031 mole) was charged to a 2-liter, 5-neck round bottom flask fitted with a water-cooled condenser, nitrogen purge, addition funnel, thermometer and stirrer. Heating to 150° C was initiated on the stirred solution. Fifty-three minutes (3180 s) later the reactor temperature reached 145° C and the nitrogen purge was initiated. Two minutes (120 s) later the 150° C temperature was reached. The monomer feed, a mixture of styrene (400 g, 3.85 moles), glacial methacrylic acid (2.69 g, 0.031 mole) and tertiary butyl perbenzoate (11.25 g, 0.056 mole) was charged to the addition funnel and added dropwise to the stirred solution. The reactor temperature was maintained between 145° C and 155° C throughout the monomer feed addition. After one hour and twenty-two minutes (4920 s) the monomer feed addition was complete. Post-reaction of the stirred solution was continued for one hour (3600 s) at 150° C. After one hour of post-reaction bisphenol A (203.5 g, 0.891 mole) was charged to the stirred solution. Four minutes (240 s) later the reactor temperature dropped to 127° C with complete dissolution of the bisphenol A in the resin solution. An advancement catalyst (ethyltriphenylphosphonium acetate•acetic acid complex, 1.25 g, 70 percent in methanol) was added to the reactor which was then reheated. Seven minutes (420 s) later the reactor reached 150° C and heating was discontinued. A maximum exotherm of 180° C resulted seven minutes (420 s) later. The reactor was allowed to cool to 175° C where it was held for one hour after the maximum exotherm. The low gloss epoxy resin product was recovered as a translucent, pale-yellow colored, brittle solid with a final epoxide equivalent weight of 606.

EXAMPLE 13

Preparation of Powder Coating Formulations

Portions of each of the epoxy resins from Example 12 and Comparative Experiment E were used to prepare powder coating formulations using the method of Example 5. Cured powder coated steel panels were prepared and tested using the method of Example 5. The results are reported in Table III.

TABLE III

| Designation of Epoxy Resin | Amount of Epoxy Resin grams | Curing Agent A[1] grams | Curing Agent B[2] grams | Modaflow® II[3] grams | Filler Type; grams | Film Thickness; (mils) mm | Gloss Degrees/ percent | Gardner Impact Forward/ Reverse (in.-lb.) J | Coating Appearance |
|---|---|---|---|---|---|---|---|---|---|
| Example 12 | 500 | 12.35 | 6.00 | 6.68 | $BaSO_4$; 145 and Carbon Black; 5 | (1.2-2.0) 0.030-0.051 | 20/20 60/63 85/79 | (160/160) 18.1/18.1 | 2 |
| Comp. Expt. D | 500 | 9.76 | 6.00 | 6.66 | $BaSO_4$; 150 | (1.2-1.5) 0.030-0.038 | 20/27 60/73 85/80 | (60/<20) 6.8/<2.3 | 1,3 |

[1]Curing Agent A was dicyanamide

[2]Curing Agent B was a mixture of 83 percent by weight dicyanamide and 17 percent by weight 2-methylimidazole

[3]A polyacrylate flow control agent (Monsanto)

## EXAMPLE 14

Low Gloss Epoxy Resin - 0.01 Equivalent per Epoxide Equivalent of Methacrylic Acid in Prereaction, 0.015 Equivalent per Epoxide Equivalent of Methacrylic Acid in Monomer Feed

A low gloss polystyrene modified advanced epoxy resin was prepared in a 0.038 $m^3$, (10 gallon) stainless steel Pfaudler reactor. The reactor was equipped with mechanical stirring, nitrogen supply and pressure/vacuum control with a range of 6.89 kPa to 345 kPa (1 to 50 psia). Temperature control was provided by a dual hot and cool heat transfer fluid system circulating through the reactor jacket. All reactants were preweighed prior to charging to the reactor. A 5 cm, (2-inch) handway fitted on the top section of the reactor was used to charge all reactants to the reactor with the exception of the monomer solution and the TBPB (tertiary butyl perbenzoate). The monomer solution and the TBPB were charged to auxiliary feed vessels from which they were metered into the reactor at a controlled rate during the monomer solution addition step. The TBPB flow rate control was automatically linked to the monomer solution flow rate in such a way that the ratio of their addition rates remained constant throughout the monomer solution addition step. The vacuum system was equipped with a chilled water condenser and a knockout pot to recover any unreacted monomer and other lights during the vacuum strip step. A nitrogen vapor phase was provided by repetitively reducing the pressure to 68.9 kPa (10 psia) and pressuring the reactor to 165 kPa (24 psia) with nitrogen during the degassing steps. The product was transferred via a drumming line from the bottom tap of the reactor through a 50 µm (micron) sock filter and into the product drums during the drumming step.

The following reactants and amounts were utilized:

| | |
|---|---|
| D.E.R.® 383 diglycidyl ether of bisphenol A having an EEW of 180.5 | 15,857 grams |
| glacial methacrylic acid | 75.7 grams |
| tertiary butyl perbenzoate (TBPB) | 317 grams |
| bisphenol A | 4,309 grams |
| advancement catalyst[1] | 26.5 grams |
| monomer solution | 12,796 grams |

[1]ethyltriphenylphosphonium acetate·acetic acid complex - 70 percent in methanol

The monomer solution was a mixture of the following reactants in the indicated amounts:

| | |
|---|---|
| styrene | 12,682 grams |
| glacial methacrylic acid | 114 grams |

The following reaction order and conditions were used:

| Reaction Step | Reactor Temperature | Reactor Pressure | Cumulative Time |
|---|---|---|---|
| Charge liquid D.E.R.® 383 and methacrylic acid | ambient | (14.7 psia) 101.4 kPa | 0 min. |
| Close reactor, pad with nitrogen and start agitation | --- | (23.5 psia) 162 kPa | 10 min. 600 s |

| | | | |
|---|---|---|---|
| Heat reactor with 155°C hot heat transfer fluid | --- | (23.5 psia) 162 kPa | 15 min. 900 s |
| Charge monomer and TBPB to respective feed vessels | --- | (23.5 psia) 162 kPa | 15 min. 900 s |
| Degas reactor three times | 137°C | --- | 46 min. 2760 s |
| Start monomer solution and TBPB feed | 146°C | (15.8 psia) 108.9 kPa | 1 hr. 8 min. 4080 s |
| Reactor temperature controlled at 150±5°C | 150°C | (16.4 psia) 113.1 kPa | 1 hr. 8 min. 4080 s |
| Monomer solution and TBPB feed complete | 150°C | (17.2 psia) 118.6 kPa | 2 hr. 52 min. 10320 s |
| Start vacuum strip by slow reduction in pressure | 152°C | --- | 3 hr. 39 min. 13140 s |
| Vacuum strip at minimum pressure | 150°C | (0.2 psia) 1.4 kPa | 4 hr. 9 min. 14940 s |
| Vacuum strip complete | 150°C | (0.3 psia) 2.1 kPa | 4 hr. 19 min. 15540 s |
| Bisphenol A charged to reactor | 153°C | (14.7 psia) 101.4 kPa | 4 hr. 28 min. 16080 s |

| | | | |
|---|---|---|---|
| Advancement catalyst charged to reactor | 147°C | (10.0 psia) 68.9 kPa | 4 hr. 39 min. 16740 s |
| Reactor degassed 4 times | --- | --- | 4 hr. 45 min. 17100 s |
| Reactor heated with 190°-200°C hot heat transfer fluid | 152°C | (17.4 psia) 120.0 kPa | 4 hr. 51 min. 17460 s |
| Maximum temperature reached and slow cooling started | 188°C | (18.1 psia) 124.8 kPa | 5 hr. 32 min. 19920 s |
| Reactor temperature controlled at 175±5°C | 175°C | (18.5 psia) 127.6 kPa | 6 hr. 2 min. 21720 s |
| Product drummed through 50 µm (micron) sock filter into product drums | 175°C | --- | 6 hr. 42 min. 24120 s |

EXAMPLE 15

Low Gloss Epoxy Resin - 0.01 Equivalent per Epoxide Equivalent of Methacrylic Acid in Prereaction, 0.015 Equivalent per Epoxide Equivalent of Methacrylic Acid in Monomer Feed, 2 pbw 2-Hydroxypropyl Acrylate in Monomer Feed

A low gloss polystyrene modified advanced epoxy resin was produced using the same equipment, procedures and reactants used in Example 14 but with the exceptions described below.

The following reactants and amounts were utilized:

| | |
|---|---|
| D.E.R.® 383 diglycidyl ether of bisphenol A having an EEW of 180.5 | 15,875 grams |
| glacial methacrylic acid | 75.7 grams |
| tertiary butyl perbenzoate (TBPB) | 317 grams |
| bisphenol A | 4,309 grams |
| advancement catalyst[1] | 26.5 grams |
| monomer solution | 12,796 grams |

[1]ethyltriphenylphosphonium acetate·acetic acid complex 70 percent in methanol

The monomer solution was a mixture of the following reactants in the indicated amounts:

| | |
|---|---|
| styrene | 12,428 grams |
| 2-hydroxypropyl acrylate | 254 grams |
| glacial methacrylic acid | 114 grams |

The following reaction order was used:

| Reaction Step | Reactor Temperature | Reactor Pressure | Cummulative Time |
|---|---|---|---|
| Charge liquid D.E.R.® 383 and methacrylic acid | ambient | (14.7 psia) 101.4 kPa | 0 min. |
| Close reactor, pad with nitrogen and start agitation | --- | (23.5 psia) 162.0 kPa | 10 min. 600 s |
| Heat reactor with 155°C hot heat transfer fluid | --- | (23.5 psia) 162.0 kPa | 15 min. 900 s |

| | | | |
|---|---|---|---|
| Charge monomer and TBPB to respective feed vessels | --- | (23.5 psia) 162.0 kPa | 15 min. 900 s |
| Degas reactor three times | 145°C | --- | 1 hr. 0 min. 3600 s |
| Start monomer solution and TBPB feed | 149°C | (16.4 psia) 113.1 kPa | 1 hr. 8 min. 4080 s |
| Reactor temperature controlled at 150±5°C | 150°C | (16.4 psia) 113.1 kPa | 2 hr. 8 min. 7680 s |
| Monomer solution and TBPB feed complete | 150°C | (17.2 psia) 118.6 kPa | 2 hr. 40 min. 9600 s |
| Start vacuum strip by slow reduction in pressure | 147°C | --- | 3 hr. 34 min. 12840 s |
| Vacuum strip at minimum pressure | 150°C | (0.2 psia) 1.4 kPa | 3 hr. 51 min. 13860 s |
| Vacuum strip complete | 153°C | (0.2 psia) 1.4 kPa | 4 hr. 6 min. 14760 s |
| Bisphenol A charged to reactor | 153°C | (14.7 psia) 101.4 kPa | 4 hr. 16 min. 15360 s |
| Advancement catalyst charged to reactor | 147°C | (10.0 psia) 68.9 kPa | 4 hr. 28 min. 16080 s |
| Reactor degassed 4 times | 146°C | --- | 4 hr. 33 min. 16380 s |

| | | | |
|---|---|---|---|
| Reactor heated with 190°-200°C hot heat transfer fluid | 146°C | (23.0 psia) 158.6 kPa | 4 hr. 36 min. 16560 s |
| Maximum temperature reached and slow cooling started | 186°C | (18.5 psia) 127.6 kPa | 5 hr. 10 min. 18600 s |
| Reactor temperature controlled at 175±5°C | 175°C | (18.5 psia) 127.6 kPa | 5 hr. 20 min. 19200 s |
| Product drummed through 50 µm (micron) sock filter into product drums | 175°C | --- | 6 hr. 20 min. 22800 s |

EXAMPLE 16

Low Gloss Epoxy Resin - 0.01 Equivalent per Epoxide Equivalent of Methacrylic Acid in Prereaction, 0.02 Equivalent per Epoxide Equivalent of Methacrylic Acid in Monomer Feed, 2 pbw 2-Hydroxypropyl Acrylate and 2 pbw Lauryl Methacrylate in Monomer Feed

A low gloss polystyrene modified advanced epoxy resin was produced using the same equipment, procedures and reactants used in Example 14 but with the exceptions described below.

The following reactants and amounts were utilized:

| | |
|---|---|
| D.E.R.® 383 diglycidyl ether of bisphenol A having an EEW of 180.5 | 15,875 grams |
| glacial methacrylic acid | 75.7 grams |
| tertiary butyl perbenzoate (TBPB) | 317 grams |
| bisphenol A | 4,309 grams |
| advancement catalyst[1] | 26.5 grams |
| monomer solution | 12,834 grams |

[1] ethyltriphenylphosphonium acetate·acetic acid complex - 70 percent in methanol

The monomer solution was a mixture of the following reactants in the indicated amounts:

| | |
|---|---|
| styrene | 12,174 grams |
| 2-hydroxypropyl acrylate | 254 grams |
| lauryl methacrylate | 254 grams |
| glacial methacrylic acid | 114 grams |

The following reaction order was used:

| Reaction Step | Reactor Temperature | Reactor Pressure | Cummulative Time |
|---|---|---|---|
| Charge liquid D.E.R.® 383 and methacrylic acid | ambient | (14.7 psia) 101.4 kPa | 0 min. |
| Close reactor, pad with nitrogen and start agitation | --- | (23.5 psia) 162.0 kPa | 10 min. 600 s |
| Heat reactor with 155°C hot heat transfer fluid | --- | (23.5 psia) 162.0 kPa | 15 min. 900 s |
| Charge monomer and TBPB to respective feed vessels | --- | (23.5 psia) 162.0 kPa | 15 min. 900 s |

| | | | |
|---|---|---|---|
| Degas reactor three times | 145°C | --- | 50 min. 3000 s |
| Start monomer solution and TBPB feed | 145°C | (18.8 psia) 129.6 kPa | 55 min. 3300 s |
| Reactor temperature controlled at 150±5°C | 150°C | --- | 1 hr. 5 min. 3900 s |
| Monomer solution and TBPB feed complete | 148°C | (18.5 psia) 127.6 kPa | 2 hr. 42 min. 9720 s |
| Start vacuum strip by slow reduction in pressure | 144°C | --- | 3 hr. 25 min. 12300 s |
| Vacuum strip complete | 153°C | (0.2 psia) 1.4 kPa | 4 hr. 0 min. 14400 s |
| Bisphenol A charged to reactor | 150°C | (14.7 psia) 101.4 kPa | 4 hr. 20 min. 15600 s |
| Advancement catalyst to reactor | 142°C | (10.0 psia) 68.9 kPa | 4 hr. 40 min. 16800 s |
| Reactor degassed 4 times | 142°C | --- | 4 hr. 44 min. 17040 s |
| Reactor heated with 190-200°C hot heat transfer fluid | 142°C | (23.0 psia) 158.6 kPa | 4 hr. 44 min. 17040 s |

| | | | |
|---|---|---|---|
| Maximum temperature reached and slow cooling started | 184°C | (17.9 psia) 123.4 kPa | 5 hr. 14 min. 18840 s |
| Reactor temperature controlled at 175±5°C | 175°C | (17.1 psia) 117.9 kPa | 5 hr. 22 min. 19320 s |
| Product drummed through 50 µm (micron) sock filter into product drums | 175°C | --- | 6 hr. 14 min. 22440 s |

EXAMPLE 17

Preparation of Powder Coating Formulations

Portions of each of the epoxy resins from Examples 14-16 were used to prepare powder coating formulations using the method of Example 5. Cured powder coated steel panels were prepared and tested using the methods of Example 5. The results are reported in Table IV.

TABLE IV

| Designation of Epoxy Resin | Amount of Epoxy Resin grams | Curing Agent A[1] grams | Curing Agent B[2] grams | Modaflow® II[3] grams | Filler Type; grams | Film Thickness; (mils) mm | Gloss Degrees/ percent | Gardner Impact Forward/ Reverse (in.-lb.) J | Coating Appearance |
|---|---|---|---|---|---|---|---|---|---|
| Example 14 | 800 | 17.20 | 9.60 | 10.67 | $BaSO_4$; 240 | (0.8-1.5) 0.02-0.038 | 20/6.1 60/29 85/63 | (160/160) 18.1/18.1 | 3,4 |
| Example 14 | 800 | 25.17 grams of Shell® P108 accelerated dicyanamide | | 21.30 | $BaSO_4$; 240 | (1.3-2.2) 0.033-0.056 | 20/2.6 60/15 85/48 | (160/160) 18.1/18.1 | Flawless |
| Example 15 | 700 | 14.62 | 8.60 | 9.33 | $BaSO_4$; 210 | (1.0-1.4) 0.025-0.036 | 20/5.5 60/27 85/70 | (160/160) 18.1/18.1 | 4 |
| Example 16 | 600 | 12.59 | 7.20 | 8.00 | $BaSO_4$; 180 | (1.1-1.5) 0.028-0.038 | 20/4.8 60/27 85/78 | (160/160) 18.1/18.1 | 4 |

[1]Curing Agent A was dicyanamide
[2]Curing Agent B was a mixture of 83 percent by weight dicyanamide and 17 percent by weight 2-methylimidazole
[3]A polyacrylate flow control agent (Monsanto)

EXAMPLE 18

A portion of the epoxy resin from Example 14 and a curing agent consisting of a salt of a polycarboxylic acid and a cyclic amidine (Hardner B68, Chemische Werke Hüls Aktiengesellschaft) were used to prepare a

powder coating formulation using the method of Example 5. Cured powder coated steel panels were prepared and tested using the methods of Example 5. The results are reported in Table V.

COMPARATIVE EXPERIMENT E

A portion of a bisphenol A advanced diglycidyl ether of bisphenol A having an epoxide equivalent weight (EEW) of 726 (D.E.R.® 662UH, The Dow Chemical Company) and a curing agent consisting of a salt of a polycarboxylic acid and a cyclic amidine (Hardner B68, Chemische Werke Hüls Aktiengesellschaft) were used to prepare a powder coating formulation using the method of Example 5. Cured powder coated steel panels were prepared and tested using the methods of Example 5. The results are reported in Table V.

TABLE V

| Designation of Epoxy Resin/ Amount (grams) | Curing Agent[1] (grams) | Modaflow® II[2] grams | Filler Type; grams | Film Thickness; (mils) mm | Gloss Degrees/ percent | Gardner Impact Forward/ Reverse (in.-lb) J | Coating Appearance |
|---|---|---|---|---|---|---|---|
| Example 18/550 | 65.1 | 7.80 | $BaSO_4$ 165 | (1.4) 0.036 | 20/0.8 60/2.9 85/2.9 | (160/160) 18.1/18.1 | Flawless |
| Comp. Expt. E D.E.R.® 662UH/600 | 65.0 | 8.45 | $BaSO_4$ 180 | (1.2) 0.030 | 20/3.2 60/14.0 85/19.0 | (160/100) 18.1/11.3 | 1 |

[1]Hardner B68 (Chemische Werke Hüls Aktiengesellschaft)

[2]A polyacrylate flow control agent (Monsanto)

## Claims

**Claims for the following Contracting States: BE, CH, DE, FR, GB, IT, GR, LI, NL, SE.**

1. An advanced epoxy resin composition which comprises the product resulting from

(I) polymerizing in the presence of a catalytic quantity of a suitable polymerization catalyst

(A) the reaction product of

(1) a diglycidyl ether of a dihydric phenol having an epoxide equivalent weight of from 111 to 350 with

(2) a compound containing a group reactive with an epoxide group and a polymerizable ethylenically unsaturated group in an amount of from 0.001 to 0.05 equivalent per epoxide equivalent contained in component (A-1); with

(B) a monomer feed containing

(1) at least one vinyl aromatic monomer in an amount of from 31 to 60 percent by weight of the total weight of components (A), (B) and (C);

(2) a compound containing a group reactive with an epoxide group and a polymerizable ethylenically unsaturated group in an amount of from 0.001 to 0.05 equivalent per epoxide equivalent contained in component (A-1); and optionally

(3) a hydroxyalkyl acrylate or methacrylate or an alkyl acrylate or methacrylate in an amount of from zero to 15 percent by weight based on total weight of components (B-1) and (B-3); and

(II) advancing, in the presence of a catalytic quantity of a suitable advancement catalyst, the resultant polymerized product with

(C) a dihydric phenol in an amount of from 0.125 to 0.80 hydroxyl equivalents per epoxide equivalent contained in component (A-1).

**2.** An advanced epoxy resin composition of Claim 1 wherein

(i) component (A-2) is present in an amount which provides from 0.005 to 0.025 equivalent per epoxide equivalent;

(ii) component (B-1) is present in an amount which provides from 35 to 45 percent by weight based upon the total weight of components (A), (B) and (C);

(iii) component (B-2) is present in an amount which provides from 0.005 to 0.025 equivalent per epoxide equivalent contained in component (A-1); and

(iv) component (B-3) is present in an amount which provides from 1 to 5 percent by weight based on total weight of components (B-1) and (B-3); and

(v) component (C) is present in an amount which provides from 0.375 to 0.50 hydroxyl equivalent per epoxide equivalent contained in component (A-1).

**3.** An advanced epoxy resin composition of Claim 2 wherein

(i) component (I-A-1) is a compound or mixture of compounds represented by the following formulas I or II

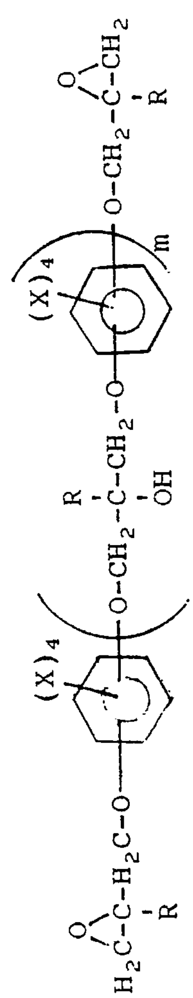

(I)

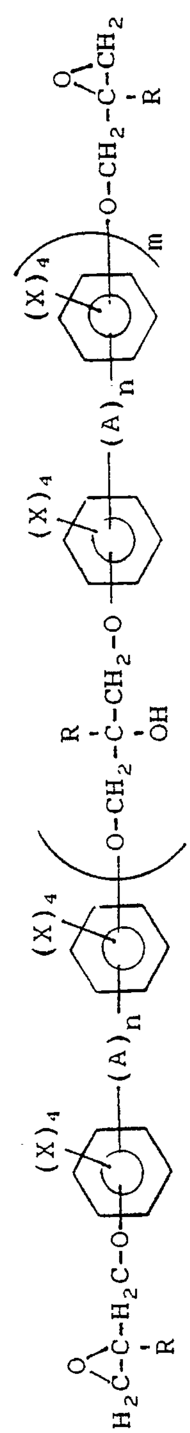

(II)

wherein A is a divalent hydrocarbon group having from one to 10 carbon atoms, -O-, -S-, -S-S-,

$$-\overset{O}{\overset{\|}{S}}-,$$

$$-\underset{O}{\underset{\|}{\overset{O}{\overset{\|}{S}}}}-,\quad -\overset{O}{\overset{\|}{C}}-;$$

each X is independently hydrogen, bromine, chlorine, or a hydrocarbyl or hydrocarbyloxy group having from 1 to 10 carbon atoms; each R is independently hydrogen or a methyl group; m has a value from zero to 5 and n has a value of zero or 1;

(ii) component (I-A-2) is acrylic acid or methacrylic acid;

(iii) component (I-B-1) is a compound or mixture of compounds represented by the following formula III

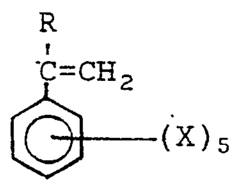

(III)

wherein R is hydrogen or methyl and each X is independently hydrogen, bromine, chlorine or a hydrocarbyl or hydrocarbyloxy group having from 1 to 10 carbon atoms;

(iv) component (I-B-2) is acrylic acid or methacrylic acid;

(v) component (I-B-3), if present, is a compound or mixture of compounds represented by the following formula IV

$$Q-O-\overset{O}{\overset{\|}{C}}-\overset{R}{\overset{|}{C}}=CH_2 \qquad (IV)$$

wherein Q is a monovalent hydrocarbyl group having from 1 to 25 carbon atoms or a hydroxyalkyl group having from 2 to 25 carbon atoms which can be branched, cyclic or polycyclic and R is a hydrogen atom or a methyl group; and

(vi) component (II-C) is a compound or mixture of compounds represented by the following formulas V and VI

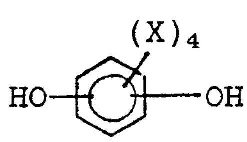

(V)

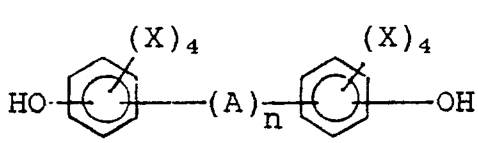

(VI)

wherein A is a divalent hydrocarbon group having from one to 10 carbon atoms, -O-, -S-, -S-S-,

$$-\overset{\overset{\displaystyle O}{\|}}{S}-,$$

$$-\underset{\underset{\displaystyle O}{\|}}{\overset{\overset{\displaystyle O}{\|}}{S}}-,\quad -\overset{\overset{\displaystyle O}{\|}}{C}-;$$

each X is independently hydrogen, bromine, chlorine, or a hydrocarbyl or hydrocarbyloxy group having from 1 to 10 carbon atoms; and n has a value of zero or 1.

**4.** An advanced epoxy resin composition of Claim 3 wherein
(i) component (I-A-1) is a diglycidyl ether of bisphenol A;
(ii) component (I-A-B) is methacrylic acid;
(iii) component (I-B-1) is styrene;
(iv) component (I-B-2) is methacrylic acid;
(v) component (I-B-3), if present, is hydroxypropyl acrylate or lauryl methacrylate or a mixture thereof; and
(vi) component (II-C) is bisphenol A.

**5.** A thermosettable powder coating formulation comprising (A) an advanced epoxy resin composition of any of Claims 1 to 4 and (B) an effective quantity of a suitable curing agent for said advanced epoxy resin composition.

**6.** A thermosettable powder coating formulation of Claim 5 wherein said curing agent is dicyandiamide.

**7.** A thermosettable powder coating formulation of Claim 6 wherein an accelerator for the curing agent is present.

**8.** A thermosettable powder coating formulation of Claim 7 wherein the accelerator is 2-methylimidazole.

**9.** The product resulting from curing an advanced epoxy resin composition of any of Claims 1 to 4 and a curing quantity of at least one curing agent for the advanced epoxy resin.

**10.** The product resulting from curing the formulation of any of Claims 5 to 8.

**Claims for the following Contracting States : AT, ES**

**1.** A method of preparing an epoxy resin composition comprising an advanced epoxy resin by
(I) polymerizing in the presence of a catalytic quantity of a suitable polymerization catalyst
(A) the reaction product of
(1) a diglycidyl ether of a dihydric phenol having an epoxide equivalent weight of from 111 to 350 with
(2) a compound containing a group reactive with an epoxide group and a polymerizable ethylenically unsaturated group in an amount of from 0.001 to 0.05 equivalent per epoxide equivalent contained in component (A-1); with
(B) a monomer feed containing
(1) at least one vinyl aromatic monomer in an amount of from 31 to 60 percent by weight of the total weight of components (A), (B) and (C);
(2) a compound containing a group reactive with an epoxide group and a polymerizable ethylenically unsaturated group in an amount of from 0.001 to 0.05 equivalent per epoxide equivalent contained in component (A-1); and optionally
(3) a hydroxyalkyl acrylate or methacrylate or an alkyl acrylate or methacrylate in an amount of from zero to 15 percent by weight based on total weight of components (B-1) and (B-3); and

(II) advancing, in the presence of a catalytic quantity of a suitable advancement catalyst, the resultant polymerized product with

(C) a dihydric phenol in an amount of from 0.125 to 0.80 hydroxyl equivalents per epoxide equivalent contained in component (A-1).

**2.** The method of claim 1 wherein

(i) component (A-2) is present in an amount which provides from 0.005 to 0.025 equivalent per epoxide equivalent;

(ii) component (B-1) is present in an amount which provides from 35 to 45 percent by weight based upon the total weight of components (A), (B) and (C);

(iii) component (B-2) is present in an amount which provides from 0.005 to 0.025 equivalent per epoxide equivalent contained in component (A-1); and

(iv) component (B-3) is present in an amount which provides from 1 to 5 percent by weight based on total weight of components (B-1) and (B-3); and

(v) component (C) is present in an amount which provides from 0.375 to 0.50 hydroxyl equivalent per epoxide equivalent contained in component (A-1).

**3.** The method of claim 2 wherein

(i) component (I-A-1) is a compound or mixture of compounds represented by the following formulas I or II

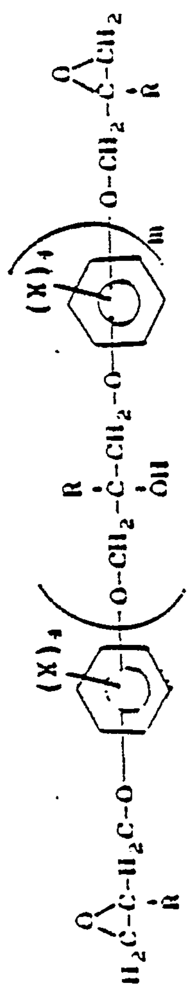

(I)

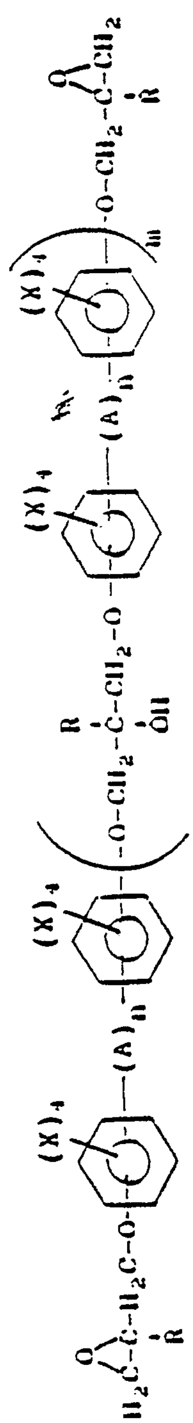

(II)

wherein A is a divalent hydrocarbon group having from one to 10 carbon atoms, -O-, -S-, -S-S-,

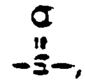

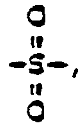, 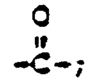;

each X is independently hydrogen, bromine, chlorine, or a hydrocarbyl or hydrocarbyloxy group having from 1 to 10 carbon atoms; each R is independently hydrogen or a methyl group; m has a value from zero to 5 and n has a value of zero or 1;

(ii) component (I-A-2) is acrylic acid or methacrylic acid;

(iii) component (I-B-1) is a compound or mixture of compounds represented by the following formula III

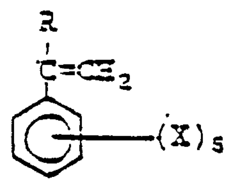

(III)

wherein R is hydrogen or methyl and each X is independently hydrogen, bromine, chlorine or a hydrocarbyl or hydrocarbyloxy group having from 1 to 10 carbon atoms;

(iv) component (I-B-2) is acrylic acid or methacrylic acid;

(v) component (I-B-3), if present, is a compound or mixture of compounds represented by the following formula IV

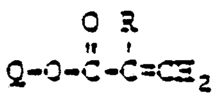

(IV)

wherein Q is a monovalent hydrocarbyl group having from 1 to 25 carbon atoms or a hydroxyalkyl group having from 2 to 25 carbon atoms which can be branched, cyclic or polycylic and R is a hydrogen atom or a methyl group; and

(VI) component (II-C) is a compound or mixture of compounds represented by the following formulas V and VI

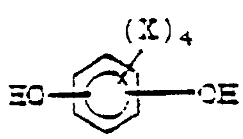

(V)

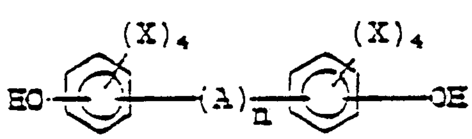

(VI)

wherein A is a divalent hydrocarbon group having from one to 10 carbon atoms, -O-, -S-, -S-S-,

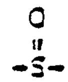,

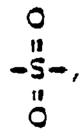, 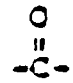;

each X is independently hydrogen. bromine, chlorine, or a hydrocarbyl or hydrocarbyloxy group having from 1 to 10 carbon atoms; and n has a value of zero or 1.

**4.** The method of claim 3 wherein
(i) component (I-A-1) is a diglycidyl ether of bisphenol A;
(ii) component (I-A-B) is methacrylic acid;
(iii) component (I-B-1) is styrene;
(iv) component (I-B-2) is methacrlyic acid;
(v) component (I-B-3), if present, is hydroxypropyl acrylate or lauryl methacrylate or a mixture thereof; and
(vi) component (II-C) is bisphenol A.

**5.** The method of preparing a thermosettable powder coating formulation by adding (A), an advanced epoxy resin composition prepared according to the method of any of claims 1 to 4, to (B), an effective quantity of a suitable curing agent for said advanced epoxy resin composition.

**6.** The method of claim 5 wherein said curing agent is dicyandiamide.

**7.** The method of claim 6 wherein an accelerator for the curing agent is present.

**8.** The method of claim 7 wherein the accelerator is 2-methylimidazole.

**9.** The method of preparing a cured resin by curing an advanced epoxy resin composition as prepared according to the method of any of claims 1 to 4 with a curing quantity of at least one curing agent for the advanced epoxy resin.

**10.** The method of preparing a cured coating product by curing the formulation as prepared according to the method of any of claims 5 to 8.

**Revendications**
**Revendications pour les Etats contractants suivants: BE, CH, DE, FR, GB, IT, GR, LI, NL, SE**

**1.** Composition de résine époxy développée, qui comprend le produit résultant de :
(I) la polymérisation, en présence d'une quantité catalytique d'un catalyseur de polymérisation approprié, de
(A) le produit de la réaction de
(1) un éther diglycidylique d'un phénol dihydroxylé ayant une masse par équivalent époxyde de 111 à 350, avec
(2) un composé contenant un groupe réagissant avec un groupe époxyde et un groupe éthyléniquement insaturé polymérisable, en une proportion de 0,001 à 0,05 équivalent par équivalent époxyde contenu dans le composant (A-1), avec
(B) une charge de monomère contenant
(1) au moins un monomère aromatique vinylique, en une proportion de 31 à 60 % en poids du poids total des composants (A), (B) et (C),
(2) un composé contenant un groupe réagissant avec un groupe époxyde et un groupe éthylèniquement insaturé polymérisable, en une proportion de 0,001 à 0,05 équivalent par

équivalent époxyde contenu dans le composant (A-1), et éventuellement

(3) un acrylate ou méthacrylate d'hydroxyalkyle ou un acrylate ou méthacrylate d'alkyle, en une proportion de zéro à 15 % en poids, par rapport au poids total des composants (B-1) et (B-3), et

(II) le développement, en présence d'une quantité catalytique d'un catalyseur de développement approprié, du produit polymérisé obtenu, avec

(C) un phénol dihydroxylé, en une proportion de 0,125 à 0,80 équivalent hydroxyle par équivalent époxyde contenu dans le composant (A-1).

**2.** Composition de résine époxy développée selon la revendication 1, dans laquelle

(i) le composant (A-2) est présent en une proportion qui fournit de 0,005 à 0,025 équivalent par équivalent époxyde;

(ii) le composant (B-1) est présent en une proportion qui fournit de 35 à 45 % en poids par rapport au poids total des composants (A), (B) et (C);

(iii) le composant (B-2) est présent en une proportion qui fournit de 0,005 à 0,025 équivalent par équivalent époxyde contenu dans le composant (A-1); et

(iv) le composant (B-3) est présent en une proportion qui fournit de 1 à 5 % en poids par rapport au poids total des composants (B-1) et (B-3); et

(v) le composant (C) est présent en une proportion qui fournit de 0,375 à 0,50 équivalent hydroxyle par équivalent époxyde contenu dans le composant (A-1).

**3.** Composition de résine époxy développée selon la revendication 2, dans laquelle

(i) le composant (I-A-1) est un composé ou un mélange de composés, représenté(s) par les formules I ou II suivantes

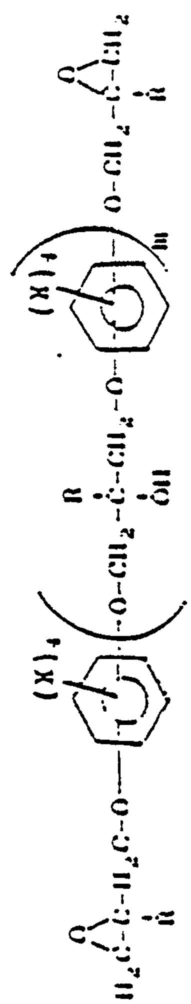

(II)

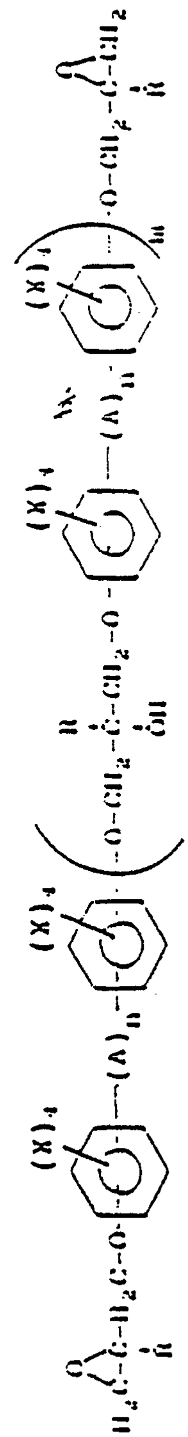

(III)

dans lesquelles A est un groupe hydrocarboné divalent comportant de 1 à 10 atomes de carbone, -O-, -S-, -S-S-,

O O O
-S-, -S-, -C- ,
O

chaque X représente indépendamment l'hydrogène, le brome, le chlore, ou un groupe hydrocarbyle ou hydrocarbyloxy, ayant de 1 à 10 atomes de carbone, chaque R représente indépendamment l'hydrogène ou un groupe méthyle, m a une valeur de zéro à 5 et n vaut zéro ou 1;
(ii) le composant (I-A-2) est l'acide acrylique ou l'acide méthacrylique ;
(iii) le composant (I-B-1) est un composé ou un mélange de composés, représenté(s) par la formule III suivante

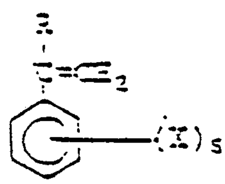

(III)

dans laquelle R est l'hydrogène ou un groupe méthyle et chaque X représente indépendamment l'hydrogène, le brome, le chlore ou un groupe hydrocarbyle ou hydrocarbyloxy ayant 1 à 10 atomes de carbone ;
(iv) le composant (I-B-2) est l'acide acrylique ou l'acide méthacrylique ;
(v) le composant (I-B-3), s'il est présent, est un composé ou un mélange de composés, représenté-(s) par la formule IV suivante

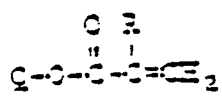

(IV)

dans laquelle Q est un groupe hydrocarbyle monovalent ayant de 1 à 25 atomes de carbone ou un groupe hydroxyalkyle ayant de 2 à 25 atomes de carbone, qui peut être ramifié, cyclique ou polycyclique, et R est un atome d'hydrogène ou un groupe méthyle; et
(vi) le composant (II-C) est un composé ou un mélange de composés, représenté(s) par les formules V et VI suivantes

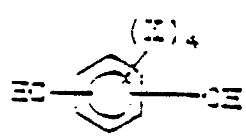

(V)

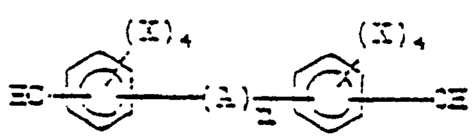

(VI)

dans lesquelles A est un groupe hydrocarboné divalent ayant de 1 à 10 atomes de carbone, -O-, -S-, -S-S-,

O O O
-S-, -S-, -C- ,
O

chaque X représente indépendamment l'hydrogène, le brome, le chlore, ou un groupe hydrocarbyle ou hydrocarbyloxy ayant de 1 à 10 atomes de carbone, et n vaut zéro ou 1.

**4.** Composition de résine époxy développée selon la revendication 3, dans laquelle
(i) le composant (I-A-1) est un éther diglycidylique de bisphénol A ;
(ii) le composant (I-A-B) est l'acide méthacrylique ;
(iii) le composant (I-B-1) est le styrène ;
(iv) le composant (I-B-2) est l'acide méthacrylique ;
(v) le composant (I-B-3), s'il est présent, est l'acrylate d'hydroxypropyle ou le méthacrylate de lauryle ou un mélange des deux; et
(vi) le composant (II-C) est le bisphénol A.

**5.** Formulation de revêtement à base de poudre thermodurcissable comprenant (A) une composition de résine époxy développée selon l'une quelconque des revendications 1 à 4 et (B) une quantité efficace d'un agent durcisseur approprié pour ladite composition de résine époxy développée.

**6.** Formulation de revêtement à base de poudre thermodurcissable selon la revendication 5, dans laquelle ledit agent durcisseur est le dicyandiamide.

**7.** Formulation de revêtement à base de poudre thermodurcissable selon la revendication 6, dans laquelle est présent un accélérateur pour l'agent durcisseur.

**8.** Formulation de revêtement à base de poudre thermodurcissable selon la revendication 7, dans laquelle l'accélérateur est le 2-méthylimidazole.

**9.** Produit obtenu par durcissement d'une composition de résine époxy développée selon l'une quelconque des revendications 1 à 4 et d'une quantité durcissante d'au moins un agent durcisseur pour la résine époxy développée.

**10.** Produit obtenu par durcissement de la formulation selon l'une quelconque des revendications 5 à 8.

**Revendications pour les Etats contractants suivants: AT, ES**

**1.** Procédé de préparation d'une composition de résine époxy contenant une résine époxy développée, qui comprend :
(I) la polymérisation, en présence d'une quantité catalytique d'un catalyseur de polymérisation approprié, de
(A) le produit de la réaction de
(1) un éther diglycidylique d'un phénol dihydroxylé ayant une masse par équivalent époxyde de 111 à 350, avec
(2) un composé contenant un groupe réagissant avec un groupe époxyde et un groupe éthyléniquement insaturé polymérisable, en une proportion de 0,001 à 0,05 équivalent par équivalent époxyde contenu dans le composant (A-1), avec
(B) une charge de monomère contenant
(1) au moins un monomère aromatique vinylique, en une proportion de 31 à 60 % en poids du poids total des composants (A), (B) et (C),
(2) un composé contenant un groupe réagissant avec un groupe époxyde et un groupe éthyléniquement insaturé polymérisable, en une proportion de 0,001 à 0,05 équivalent par équivalent époxyde contenu dans le composant (A-1), et éventuellement
(3) un acrylate ou méthacrylate d'hydroxyalkyle ou un acrylate ou méthacrylate d'alkyle, en une proportion de zéro à 15 % en poids, par rapport au poids total des composants (B-1) et (B-3), et

(II) le développement, en présence d'une quantité catalytique d'un catalyseur de développement approprié, du produit polymérisé obtenu, avec
(C) un phénol dihydroxylé, en une proportion de 0,125 à 0,80 équivalent hydroxyle par équivalent époxyde contenu dans le composant (A-1).

2. Procédé selon la revendication 1, dans lequel
(i) le composant (A-2) est présent en une proportion qui fournit de 0,005 à 0,025 équivalent par équivalent époxyde ;
(ii) le composant (B-1) est présent en une proportion qui fournit de 35 à 45 % en poids par rapport au poids total des composants (A), (B) et (C) ;
(iii) le composant (B-2) est présent en une proportion qui fournit de 0,005 à 0,025 équivalent par équivalent époxyde contenu dans le composant (A-1) ; et
(iv) le composant (B-3) est présent en une proportion qui fournit de 1 à 5 % en poids par rapport au poids total des composants (B-1) et (B-3) ; et
(v) le composant (C) est présent en une proportion qui fournit de 0,375 à 0,50 équivalent hydroxyle par équivalent époxyde contenu dans le composant (A-1).

3. Procédé selon la revendication 2, dans lequel
(i) le composant (I-A-1) est un composé ou un mélange de composés, représenté(s) par les formules I ou II suivantes

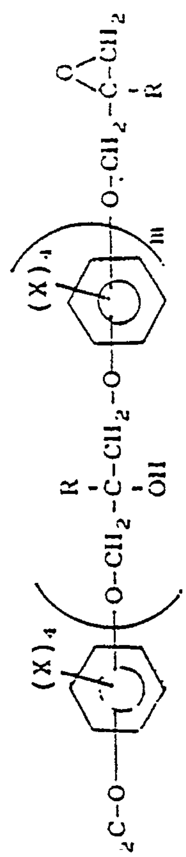

( I )

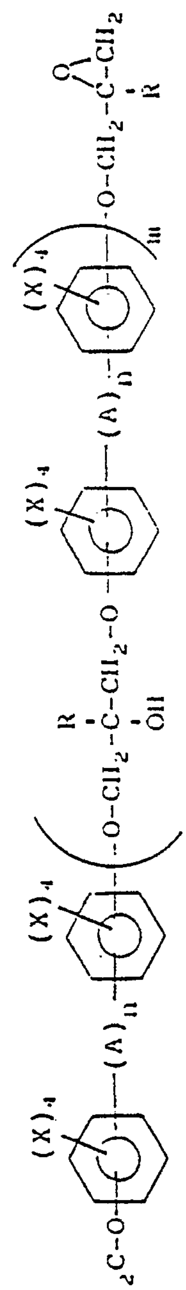

( II )

dans lesquelles A est un groupe hydrocarboné divalent comportant de 1 à 10 atomes de carbone, -O-, -S-, -S-S-,

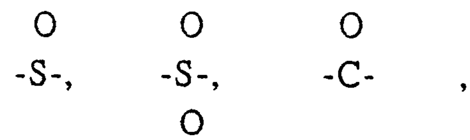

chaque X représente indépendamment l'hydrogène, le brome, le chlore, ou un groupe hydrocarbyle ou hydrocarbyloxy, ayant de 1 à 10 atomes de carbone, chaque R représente indépendamment l'hydrogène ou un groupe méthyle, m vaut de zéro à 5 et n vaut zéro ou 1 ;
(ii) le composant (I-A-2) est l'acide acrylique ou l'acide méthacrylique ;
(iii) le composant (I-B-1) est un composé ou un mélange de composés, représenté(s) par la formule III suivante

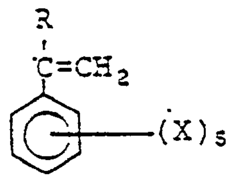

(III)

dans laquelle R est l'hydrogène ou un groupe méthyle et chaque X représente indépendamment l'hydrogène, le brome, le chlore ou un groupe hydrocarbyle ou hydrocarbyloxy ayant 1 à 10 atomes de carbone ;
(iv) le composant (I-B-2) est l'acide acrylique ou l'acide méthacrylique ;
(v) le composant (I-B-3), s'il est présent, est un composé ou un mélange de composés, représenté(s) par la formule IV suivante

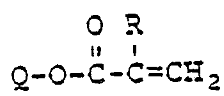

(IV)

dans laquelle Q est un groupe hydrocarbyle monovalent ayant de 1 à 25 atomes de carbone ou un groupe hydroxyalkyle ayant de 2 à 25 atomes de carbone, qui peut être ramifié, cyclique ou polycyclique, et R est un atome d'hydrogène ou un groupe méthyle ; et
(vi) le composant (II-C) est un composé ou un mélange de composés, représenté(s) par les formules V et VI suivantes

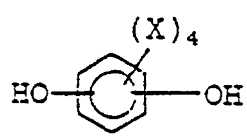

(V)

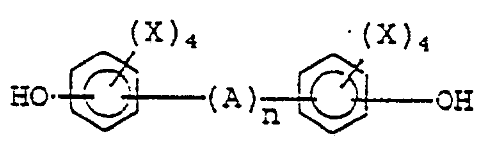

(VI)

dans lesquelles A est un groupe hydrocarboné divalent ayant de 1 à 10 atomes de carbone, -O-, -S-, -S-S-,

$$\overset{O}{-S-},\quad \overset{O}{\underset{O}{-S-}},\quad \overset{O}{-C-}\quad ,$$

chaque X représente indépendamment l'hydrogène, le brome, le chlore, ou un groupe hydrocarbyle ou hydrocarbyloxy ayant de 1 à 10 atomes de carbone, et n vaut zéro ou 1.

4. Procédé selon la revendication 3, dans lequel
   (i) le composant (I-A-1) est un éther diglycidylique de bisphénol A ;
   (ii) le composant (I-A-B) est l'acide méthacrylique ;
   (iii) le composant (I-B-1) est le styrène ;
   (iv) le composant (I-B-2) est l'acide méthacrylique ;
   (v) le composant (I-B-3), s'il est présent, est l'acrylate d'hydroxypropyle ou le méthacrylate de lauryle ou un mélange des deux ; et
   (vi) le composant (II-C) est le bisphénol A.

5. Procédé de préparation d'une formulation de revêtement à base de poudre thermodurcissable, comprenant l'addition de (A) une composition de résine époxy développée préparée selon le procédé de l'une quelconque des revendications 1 à 4 à (B) une quantité efficace d'un agent durcisseur approprié pour ladite composition de résine époxy développée.

6. Procédé selon la revendication 5, dans lequel ledit agent durcisseur est le dicyandiamide.

7. Procédé selon la revendication 6, dans lequel est présent un accélérateur pour l'agent durcisseur.

8. Procédé selon la revendication 7, dans lequel l'accélérateur est le 2-méthylimidazole.

9. Procédé de préparation d'une résine durcie par durcissement d'une composition de résine époxy développée telle que préparée selon le procédé de l'une quelconque des revendications 1 à 4, avec une quantité durcissante d'au moins un agent durcisseur pour la résine époxy développée.

10. Procédé de préparation d'un produit de revêtement durci par durcissement de la formulation préparée selon le procédé de l'une quelconque des revendications 5 à 8.

**Patentansprüche**
**Patentansprüche für folgende Vertragsstaaten : BE, CH, DE, FR, GB, IT, GR, LI, NL, SE**

1. Weiterentwickelte Epoxyharzzusammensetzung, enthaltend das Produkt, erhalten aus
   (I) Polymerisieren in Gegenwart einer katalytischen Menge eines geeigneten Polymerisationskatalysators von
      (A) das Reaktionsprodukt von
         (1) einem Diglycidylether eines zweiwertigen Phenols mit einem Epoxidäquivalentgewicht von 111-350 mit
         (2) einer Verbindung, die eine mit einer Epoxidgruppe umsetzbare Gruppe und eine polymerisierbare ethylenisch ungesättigte Gruppe enthält, in einer Menge von 0,001 bis 0,05 Äquivalenten pro Epoxidäquivalent, das in Bestandteilen (A-1) enthalten ist, mit
      (B) einer Monomerzufuhr, enthaltend
         (1) mindestens ein Monovinylidenaromatisches Monomer in einer Menge von 31-60 Gew.-% des Gesamtgewichtes der Bestandteile (A) , (B) und (C),
         (2) eine Verbindung, die eine mit einer Epoxidgruppe umsetzbare Gruppe und eine polymerisierbare ethylenisch ungesättigte Gruppe enthält in einer Menge von 0,001 bis 0,05 Äquivalent pro Epoxidäquivalent, das in Bestandteil (A-1) enthalten ist, und gegebenenfalls
         (3) ein Hydroxyalkylacrylat oder -Methacrylat oder ein Alkylacrylat oder -Methacrylat in einer Menge von 0-15 Gew.-%, bezogen auf Gesamtgewicht der Bestandteile (B-1) und (B-3), und
         (II) Weiterentwickeln des erhaltenen polymerisierten Produktes in Gegenwart einer katalytischen Menge eines geeigneten Weiterentwicklungskatalysators mit

(C) einem zweiwertigen Phenol in einer Menge von 0,125 bis 0,80 Hydroxyäquivalenten pro Epoxidäquivalente, die in Bestandteil (A-1) enthalten sind.

**2.** Weiterentwickelte Epoxyharzzusammensetzung nach Anspruch 1,
**dadurch gekennzeichnet,**
daß
(i) Bestandteil (A-2) in einer Menge vorhanden ist, die von 0,005 bis 0,025 Äquivalente pro Epoxidäquivalent ergibt,
(ii) Bestandteil (B-1) in einer Menge vorhanden ist, die 35 bis 45 Gew.-%, bezogen auf Gesamtgewicht der Bestandteile (A) , (B) und (C) ergibt,
(iii) Bestandteil (B-2) in einer Menge vorhanden ist, die von 0,005 bis 0,025 Äquivalente pro Epoxidäquivalent, das in Bestandteil (A-1) enthalten ist, ergibt und
(iv) Bestandteil (B-3) in einer Menge vorhanden ist, die von 1-5 Gew.-%, bezogen auf Gesamtgewicht der Bestandteile (B-1) und (B-3), ergibt und
(v) Bestandteile (C) in einer Menge vorhanden ist, die von 0,375 bis 0,50 Hydroxyäquivalente pro Epoxidäquivalent, das in Bestandteil (A-1) enthalten ist, ergibt.

**3.** Weiterentwickelte Epoxyharzzusammensetzung nach Anspruch 2,
**dadurch gekennzeichnet,**
daß
(i) Bestandteil (I-A-1) eine Verbindung oder Mischung von Verbindungen der nachfolgenden Formeln (I) oder (II) ist

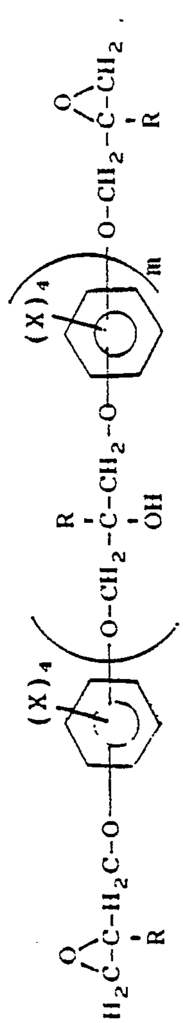

(I)

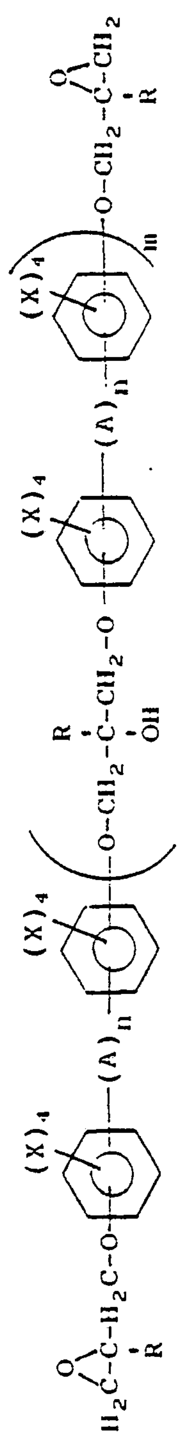

(II)

in denen A eine zweiwertige Kohlenwasserstoffgruppe mit 1-10 Kohlenstoffatomen, -o-, -s-, -s-s-,

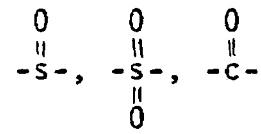

ist, jedes X unabhängig Wasserstoff, Brom, Chlor oder eine Kohlenwasserstoff- oder Kohlenwasserstoffoxygruppe mit 1-10 Kohlenstoffatomen ist, jedes R ist unabhängig Wasserstoff oder eine Methylgruppe, m hat einen Wert von 0-5 und n hat einen Wert von 0 oder 1,

(ii) Bestandteil (I-A-2) Acrylsäure oder Methacrylsäure ist,

(iii) Bestandteil (I-B-1) eine Verbindung oder eine Mischung von Verbindungen ist der nachfolgenden Formel III

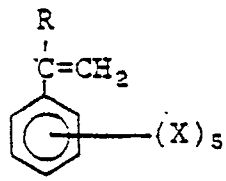

(III)

in der R Wasserstoff oder Methyl ist und jedes X unabhängig Wasserstoff, Brom, Chlor oder eine Kohlenwasserstoff- oder Kohlenwasserstoffoxygruppe mit 1-10 Kohlenstoffatomen ist,

(iv) Bestandteil (I-B-2) Acrylsäure oder Methacrylsäure ist,

(v) Bestandteil (I-B-3), wenn vorhandene Verbindung oder Mischung von Verbindungen ist der nachfolgenden Formel IV

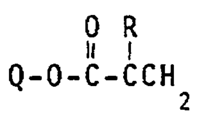

(IV)

in der Q eine einwertige Kohlenwasserstoffgruppe mit 1-25 Kohlenstoffatomen oder eine Hydroxyalkylgruppe mit 2-25 Kohlenstoffatomen ist, die zweigt, zyklisch oder polyzyklisch sein kann, und R ein Wasserstoffatom oder eine Methylgruppe ist und

(vi) Bestandteil (II-C), eine Verbindung oder Mischung von Verbindungen der nachfolgenden Formeln V und VI ist

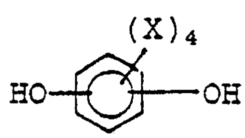

(V)

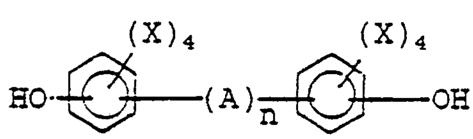

(VI)

in denen A eine zweiwertige Kohlenwasserstoffgruppe mit 1-10 Kohlenstoffatomen, -o-, -s-, -s-s-,

$$-\overset{O}{\overset{\|}{S}}-,\quad -\underset{\underset{O}{\|}}{\overset{O}{\overset{\|}{S}}}-,\quad -\overset{O}{\overset{\|}{C}}-$$

ist, jedes X ist unabhängig Wasserstoff, Brom, Chlor oder eine Kohlenwasserstoffgruppe oder Kohlenwasserstoffoxygruppe mit 1-10 Kohlenstoffatomen und n einen Wert von 0 oder 1 hat.

**4.** Weiterentwickelte Epoxyharzzusammensetzung nach Anspruch 3,
**dadurch gekennzeichnet,**
daß
(i) Bestandteil (I-A-1) ein Diglycidylether von Bisphenol A ist,
(ii) Bestandteil (I-A-B) Methacrylsäure ist,
(iii) Bestandteil (I-B-1) Styrol ist,
(iv) Bestandteil (I-B-2) Methacrylsäure ist,
(v) Bestandteil (I-B-3) , wenn vorhanden, Hydroxypropylacrylat oder Laurylmethacrylat oder eine Mischung derselben ist und
(vi) Bestandteil (II-C) Bisphenol A ist.

**5.** Wärmehärtbare Pulverbeschichtungszusammensetzung, enthaltend (A) eine weiterentwickelte Epoxyharzzusammensetzung nach jedem der Ansprüche 1 bis 4 und (B) eine wirksame Menge eines geeigneten Härtemittels für die weiterentwickelte Epoxyharzzusammensetzung.

**6.** Wärmehärtbare Pulverbeschichtungszusammensetzung nach Anspruch 5,
**dadurch gekennzeichnet,**
daß das Härtemittel Dicyandiamid ist.

**7.** Wärmehärtbare Pulverbeschichtungszusammensetzung nach Anspruch 6,
**dadurch gekennzeichnet,**
daß ein Beschleuniger für das Härtungsmittel vorhanden ist.

**8.** Wärmehärtbare Pulverbeschichtungszusammensetzung nach Anspruch 7,
**dadurch gekennzeichnet,**
daß der Beschleuniger 2-Methylimidazol ist.

**9.** Produkt, erhalten durch Härten einer weiterentwickelten Epoxyharzzusammensetzung nach jedem der Ansprüche 1 bis 4 und einer härtenden Menge mindestens eines Härtungsmittels für das weiterentwikkelte Epoxyharz.

**10.** Produkt, erhalten durch Härter der Zusammensetzung nach jedem der Ansprüche 5 bis 8.

**Patentansprüche für folgende Vertragsstaaten : ET, ES**

**1.** Verfahren zum Herstellen einer Epoxyharzzusammensetzung, enthaltend ein weiterentwickeltes Epoxyharz durch
(1) Polymerisieren in Gegenwart einer katalytischen Menge eines geeigneten Polymerisationskatalysators von
(A) das Reaktionsprodukt von
(1) einem Diglycidylether eines zweiwertigen Phenols mit einem Epoxidäquivalentgewicht von lll-350 mit
(2) einer Verbindung, die eine mit einer Epoxidgruppe umsetzbare Gruppe und eine polymerisierbare ethylenisch ungesättigte Gruppe enthält, in einer Menge von 0,001 bis 0,05 Äquivalenten pro Epoxidäquivalent, das in Bestandteilen (A-1) enthalten ist, mit
(B) einer Monomerzufuhr, enthaltend
(1) mindestens ein Monovinylidenaromatisches Monomer in einer Menge von 31-60 Gew.-% des Gesamtgewichtes der Bestandteile (A) , (B) und (C),
(2) eine Verbindung, die eine mit einer Epoxidgruppe umsetzbare Gruppe und eine polymerisierbare ethylenisch ungesättigte Gruppe enthält in einer Menge von 0,001 bis 0,05 Äquivalent pro Epoxidäquivalent, das in Bestandteil (A-1) enthalten ist, und gegebenenfalls

(3) ein Hydroxyalkylacrylat oder -Methacrylat oder ein Alkylacrylat oder -Methacrylat in einer Menge von 0-15 Gew.-%, bezogen auf Gesamtgewicht der Bestandteile (B-1) und (B-3), und

(II) Weiterentwickeln des erhaltenen polymerisierten Produktes in Gegenwart einer katalytischen Menge eines geeigneten Weiterentwicklungskatalysators mit

(C) einem zweiwertigen Phenol in einer Menge von 0,125 bis 0,80 Hydroxyäquivalenten pro Epoxidäquivalente, die in Bestandteil (A-1) enthalten sind.

**2.** Verfahren nach Anspruch 1,
**dadurch gekennzeichnet,**
daß

(i) Bestandteil (A-2) in einer Menge vorhanden ist, die von 0,005 bis 0,025 Äquivalente pro Epoxidäquivalent ergibt,

(ii) Bestandteil (B-1) in einer Menge vorhanden ist, die 35 bis 45 Gew.-%, bezogen auf Gesamtgewicht der Bestandteile (A), (B) und (C) ergibt,

(iii) Bestandteil (B-2) in einer Menge vorhanden ist, die von 0,005 bis 0,025 Äquivalente pro Epoxidäquivalent, das in Bestandteil (A-1) enthalten ist, ergibt und

(iv) Bestandteil (B-3) in einer Menge vorhanden ist, die von 1-5 Gew.-%, bezogen auf Gesamtgewicht der Bestandteile (B-1) und (B-3), ergibt und

(v) Bestandteile (C) in einer Menge vorhanden ist, die von 0,375 bis 0,50 Hydroxyäquivalente pro Epoxidäquivalent, das in Bestandteil (A-1) enthalten ist, ergibt.

**3.** Verfahren nach Anspruch 2,
**dadurch gekennzeichnet,**
daß

(i) Bestandteil (I-A-1) eine Verbindung oder Mischung von Verbindungen der nachfolgenden Formeln (I) oder (II) ist

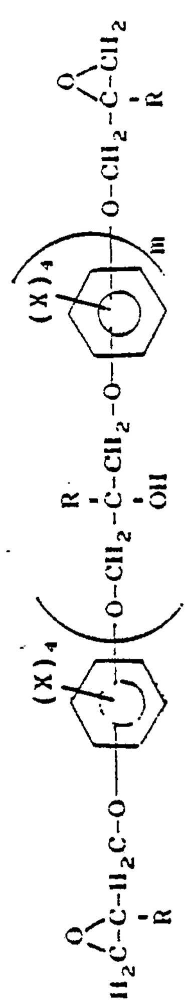

(I)

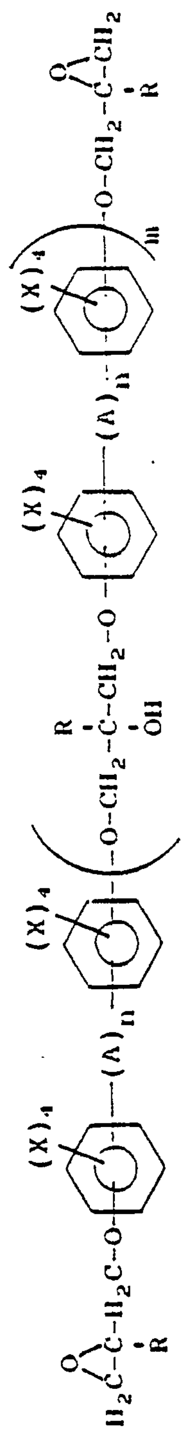

(II)

in denen A eine zweiwertige Kohlenwasserstoffgruppe mit 1-10 Kohlenstoffatomen, -o-, -s-, -s-s-,

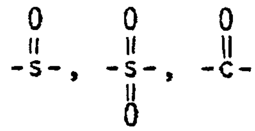

ist, jedes X unabhängig Wasserstoff, Brom, Chlor oder eine Kohlenwasserstoff- oder Kohlenwasserstoffoxygruppe mit 1-10 Kohlenstoffatomen ist, jedes R ist unabhängig Wasserstoff oder eine Methylgruppe, m hat einen Wert von 0-5 und n hat einen Wert von 0 oder 1,

(ii) Bestandteil (I-A-2) Acrylsäure oder Methacrylsäure ist,

(iii) Bestandteil (I-B-1) eine Verbindung oder eine Mischung von Verbindungen ist der nachfolgenden Formel III

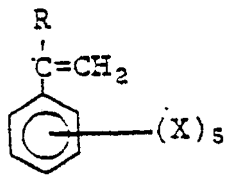

(III)

in der R Wasserstoff oder Methyl ist und jedes X unabhängig Wasserstoff, Brom, Chlor oder eine Kohlenwasserstoff- oder Kohlenwasserstoffoxygruppe mit 1-10 Kohlenstoffatomen ist,

(iv) Bestandteil (I-B-2) Acrylsäure oder Methacrylsäure ist,

(v) Bestandteil (I-B-3), wenn vorhandene Verbindung oder Mischung von Verbindungen ist der nachfolgenden Formel IV

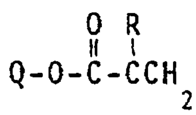

(IV)

in der Q eine einwertige Kohlenwasserstoffgruppe mit 1-25 Kohlenstoffatomen oder eine Hydroxyalkylgruppe mit 2-25 Kohlenstoffatomen ist, die zweigt, zyklisch oder polyzyklisch sein kann, und R ein Wasserstoffatom oder eine Methylgruppe ist und

(vi) Bestandteil (II-C), eine Verbindung oder Mischung von Verbindungen der nachfolgenden Formeln V und VI ist

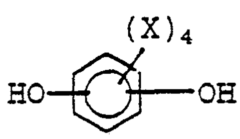

(V)

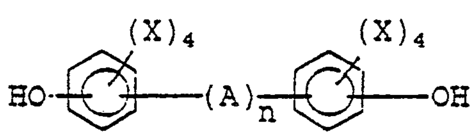

(VI)

in denen A eine zweiwertige Kohlenwasserstoffgruppe mit 1-10 Kohlenstoffatomen, -o-, -s-, -s-s-,

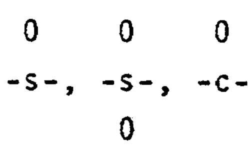

ist, jedes X ist unabhängig Wasserstoff, Brom, Chlor oder eine Kohlenwasserstoffgruppe oder Kohlenwasserstoffoxygruppe mit 1-10 Kohlenstoffatomen und n einen Wert von 0 oder 1 hat.

**4.** Verfahren nach Anspruch 3,
**dadurch gekennzeichnet,**
daß
(i) Bestandteil (I-A-1) ein Diglycidylether von Bisphenol A ist,
(ii) Bestandteil (I-A-B) Methacrylsäure ist,
(iii) Bestandteil (I-B-1) Styrol ist,
(iv) Bestandteil (I-B-2) Methacrylsäure ist,
(v) Bestandteil (I-B-3), wenn vorhanden, Hydroxypropylacrylat oder Laurylmethacrylat oder eine Mischung derselben ist und
(vi) Bestandteil (II-C) Bisphenol A ist.

**5.** Verfahren zur Herstellung einer wärmehärtbaren Pulverbeschichtungszusammensetzung durch Hinzufügen (A) einer weiterentwickelten Epoxyharzzusammensetzung, hergestellt nach dem Verfahren nach jedem der Ansprüche 1 bis 4 zu (B) einer wirksamen Menge eines geeigneten Härtemittels für die weiterentwickelte Epoxyharzzusammensetzung.

**6.** Verfahren nach Anspruch 5,
**dadurch gekennzeichnet,**
daß das Härtemittel Dicyandiamid ist.

**7.** Verfahren nach Anspruch 6,
**dadurch gekennzeichnet,**
daß ein Beschleuniger für das Härtungsmittel vorhanden ist.

**8.** Verfahren nach Anspruch 7,
**dadurch gekennzeichnet,**
daß der Beschleuniger 2-Methylimidazol ist.

**9.** Verfahren zum Herstellen eines gehärteten Härten einer weiterentwickelten Epoxyharzzusammensetzung, hergestellt nach dem Verfahren nach jedem der Ansprüche 1 bis 4 mit einer härtenden Menge mindestens eines Härtungsmittels für das weiterentwickelte Epoxyharz.

**10.** Verfahren zum Herstellen eines gehärteten Beschichtungsproduktes durch Härten einer Zusammensetzung, hergestellt nach dem Verfahren nach jedem der Ansprüche 5 bis 8.